# EUROPEAN PATENT APPLICATION

(11) **EP 4 123 546 A1**
(43) Date of publication of application: **25.01.2023**
(21) Application number: 20925735.1
(22) Date of filing: 09.11.2020
(51) Int. Cl.: G06Q 30/02

(54) **INFORMATION PROCESSING DEVICE, INFORMATION PROCESSING METHOD, PROGRAM, COMPUTER-READABLE RECORDING MEDIUM**

(30) Priority: 19.03.2020 JP 2020049865
(71) Applicant: Sato Holdings Kabushiki Kaisha, Tokyo 108-0023 (JP)
(72) Inventor: TACHINAMI, Hideki, Tokyo 108-0023 (JP)
(74) Representative: Grünecker Patent- und Rechtsanwälte PartG mbB
(86) International application number: PCT/JP2020/041671
(87) International publication number: WO 2021/186789

(57) **Abstract**

The present invention is an information processor including: a first acquisition unit configured to acquire flow line information containing positions and times of a communication device that is attached to a product carrying tool used in an area by a user; a second acquisition unit configured to acquire, based on the flow line information of the communication device acquired by the first acquisition unit, stay time information of each of a plurality of divided regions that divide the area; and a flow line assignment unit configured to assign at least a piece of the flow line information of the communication device as flow line information of the user, based on the stay time information acquired by the second acquisition unit and based on time information set to each of the plurality of divided regions.

## Description

### FIELD

The present invention relates to an information processor, an information processing method, a program, and a computer-readable recording medium.

### BACKGROUND

In order to understand user consumption behavior and to raise more sales in commercial facilities, such as supermarkets and shopping malls, it has been desired to analyze information about how consumers move around in facilities.

In one example, a position information collector has been developed (for example, Japanese Unexamined Patent Application Laid-Open No. 2017-33442). The position information collector accumulates behavior logs (movement histories) of customer users in shopping floors by receiving signals transmitted from signal transmitters. The signal transmitters are disposed on portable containers for containing products and can be carried by users in shopping areas.

### BRIEF SUMMARY

### TECHNICAL PROBLEM

In this situation, in conventional systems, while signal transmitters or other communication devices are attached to product carrying tools, such as portable containers or carts, the same product carrying tool is not necessarily used only by one person. For example, one user may leave a cart at any place in a store area, and then another user may start using this cart. In this situation, due to sharing of one cart by a plurality of users (store visitors), unless a flow line of a communication device attached to the cart is divided per individual user, behavior analysis in the store of the store visitors is not appropriately conducted.

In view of these circumstances, an object of the present invention is to identify flow line information of a user from flow line information of a communication device.

### SOLUTION TO PROBLEM

One aspect of the present invention provides an information processor including a first acquisition unit, a second acquisition unit, and a flow line assignment unit. The first acquisition unit is configured to acquire flow line information containing positions and times of a communication device that is attached to a product carrying tool used in an area by a user. The second acquisition unit is configured to acquire, based on the flow line information of the communication device acquired by the first acquisition unit, stay time information of each of a plurality of divided regions that divide the area. The flow line assignment unit is configured to assign at least a piece of the flow line information of the communication device as flow line information of the user, based on the stay time information acquired by the second acquisition unit and based on time information set to each of the plurality of divided regions.

### ADVANTAGEOUS EFFECTS

The one aspect of the present invention enables identifying flow line information of a user from flow line information of a communication device.

### BRIEF DESCRIPTION OF DRAWINGS

FIG. 1 schematically shows a purchase analysis system of an embodiment.
FIG. 2 is a plan view of an exemplary store employing the purchase analysis system of the embodiment.
FIG. 3 shows an example of data components of a flow line data set.
FIG. 4 shows an example of a flow line of one radio tag in the plan view of FIG. 2.
FIG. 5 is a block diagram showing an internal configuration of each device of the purchase analysis system of the embodiment.
FIG. 6 is a flowchart showing a main routine of a customer flow line data creation process.
FIG. 7 is a flowchart showing a subroutine of a zone identification process.
FIG. 8 shows an example of zone passing data created by the zone identification process.
FIG. 9 shows an example of the zone passing data updated by the zone identification process.
FIG. 10 is a flowchart showing a subroutine of a zone data set creation process.
FIG. 11 shows an example of a zone data set created by the zone data set creation process.
FIG. 12 is a flowchart showing a subroutine of a zone delete process.
FIG. 13 shows an example of the zone data set modified by the zone delete process.
FIG. 14 is a flowchart showing a subroutine of a zone merging process.
FIG. 15 is a flowchart showing a subroutine of a zone lost determination process.
FIG. 16 shows an example of the zone data set modified by the zone merging process and the zone lost determination process.
FIG. 17 is a flowchart showing a subroutine of a customer creation process.
FIG. 18 shows a specific example of a customer data set created by the customer creation process.
FIG. 19 is a flowchart showing a subroutine of a customer delete process.
FIG. 20 shows an example of processing results of the customer creation process and the customer delete process.
FIG. 21 is a plan view of an exemplary store.
FIG. 22 shows an example of a flow line of a radio tag and an example of correspondence with a customer.
FIG. 23 shows an example of a flow line of a radio tag and an example of correspondence with a customer.
FIG. 24 shows an example of a flow line of a radio tag and an example of correspondence with a customer.
FIG. 25 shows an example of a flow line of a radio tag and an example of correspondence with a customer.
FIG. 26 shows an example of a flow line of a radio tag and an example of correspondence with a customer.

### DETAILED DESCRIPTION

The present invention is related to Japanese Patent Application No. 2020-49865 filed with the Japan Patent Office on March 19, 2020, the entire contents of which are incorporated into this specification by reference.

Hereinafter, an embodiment of an information processor and a program of the present invention will be described. The following describes an example of a system including an information processor, which is a purchase analysis system for identifying flow line information of a user from flow line information of a communication device that is attached to a product carrying tool.

For example, in a store with a plurality of selling sections existing alongside one another, such as a supermarket, many store visitors move around in the store to pick up products from the selling sections and then pay at a checkout counter (at a cash register). Meanwhile, a shopping cart, a shopping basket, or the like, is generally used to carry picked-up products to the checkout counter. In order to analyze a product movement of a customer, for example, it is possible to attach a communication device to a shopping cart (an example of a product carrying tool) and obtain a flow line of the cart (that is, a flow line of the communication device). Unfortunately, the shopping cart in the store is used by unspecified customers (users) in the store. For this reason, although a flow line of the shopping cart can be obtained, it is necessary to divide the flow line of the shopping cart into flow lines of a plurality of customers that may be contained therein. In one case, one customer leaves a used cart in a store, and after a little while, another customer starts using this cart. Thus, a flow line of a communication device attached to a cart can include flow lines of a plurality of customers. In view of this, a flow line of a communication device is divided into flow lines of respective customers in order to clarify consumer behavior in a store of each customer.

In consideration of this, a purchase analysis system 1 described below is configured to identify a flow line of an individual customer from a flow line of a communication device.

The following describes a case of using a radio tag as a communication device to be attracted to a shopping cart. However, the type of the communication device is not limited thereto, and another communication device such as a tablet terminal may be used.

### (1) Overview of Purchase Analysis System

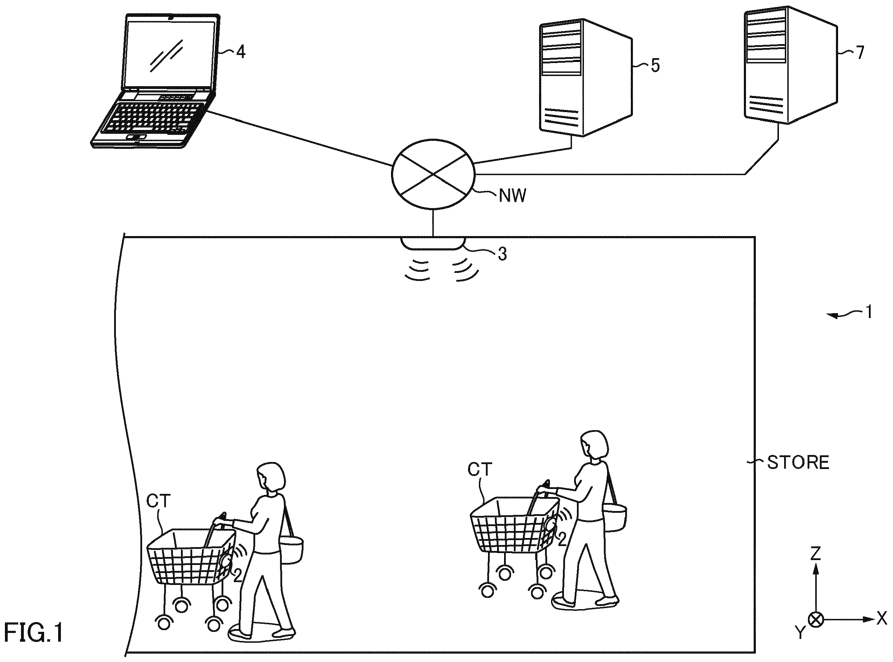

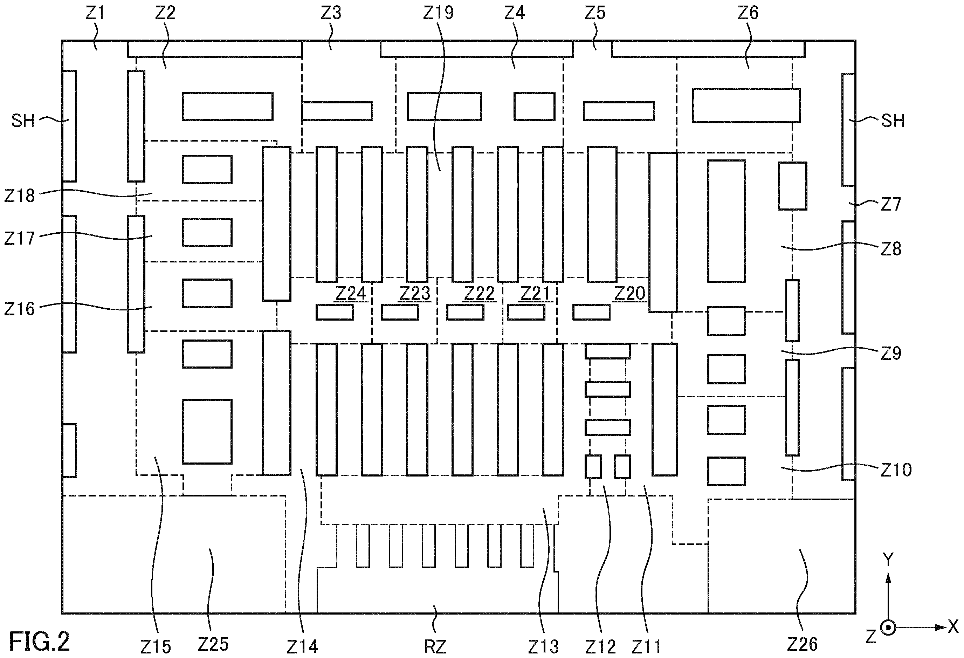

An overview of a purchase analysis system 1 of this embodiment will be described with reference to FIGs. 1 and 2.

FIG. 1 schematically shows the purchase analysis system 1 of this embodiment. FIG. 2 is a plan view of an exemplary store employing the purchase analysis system 1 of this embodiment. Note that an XYZ coordinate system is defined relative to a certain position in the store in each drawing.

As shown in FIG. 1, the purchase analysis system 1 of this embodiment includes a radio tag 2, a receiver 3, a store terminal 4, a server 5 (an example of an information processor), and a POS system 7. The radio tag 2 is attached to a cart CT that is used by each customer in the store. Although FIG. 1 shows a case of attaching the radio tag 2 to the cart CT, the radio tag 2 may be attached to a shopping basket (not shown) on the cart CT.

As described above, the radio tag 2 is an example of a communication device and is, for example, a relatively small wireless communication device.

The receiver 3 and the server 5 are connected via a network NW and constitute a position identifying system for identifying a position of a store visitor in the store. The network NW is, for example, a cellular network, a Wi-Fi network, the Internet, a local area network (LAN), a wide area network (WAN), a public circuit, a dedicated circuit, a wireless base station, etc. The receiver 3 (locator) is installed on a ceiling of the store. The receiver 3 receives a radio wave that is transmitted by the radio tag 2, which is attached to a cart CT used in the store by a store visitor, and it measures an incident angle of the radio wave. The server 5 identifies a position (position in terms of XY coordinates) in the store of the customer based on the incident angle measured by the receiver 3 (that is, measures the position of the radio tag 2).

The communication protocol between the radio tag 2 and the receiver 3 is not specifically limited, but examples thereof include Wi-Fi (registered trademark) and Bluetooth Low Energy (registered trademark) (hereinafter abbreviated as "BLE").

The server 5 measures a position of the customer (that is, a position of the radio tag 2) in the store and creates (acquires) a flow line data set. The server 5 also executes a customer data creation program (described later) based on the flow line data set and creates a customer data set (described later). The customer data set is data showing a flow line of each customer, which is extracted from the flow line data set.

The store terminal 4 is placed, for example, in an office of the store, and it is a terminal having a display panel, such as a personal computer or a tablet terminal. The store terminal 4 is communicable with the server 5 via the network NW. For example, the store terminal 4 is configured to acquire and display a flow line data set per tag ID (tag identification information) of the radio tag 2 and/or to display a customer data set as a result of executing the customer data creation program. Displaying a customer data set on the store terminal 4 enables an employee of the store to analyze behavior of a customer in the store.

Although the store terminal 4 is installed for the purpose of viewing the result of executing the customer data creation program by the server 5, and other information, in this embodiment, such a terminal does not have to be installed in the store. In one example, the system may be configured so that the execution result and so on can be viewed from any information processing terminal that is accessible to the server 5 by authentication of log-in information.

With reference to FIG. 2, the area in the exemplary store includes a plurality of sell zones (simply called "zones" as appropriate) Z1 to Z26 and a checkout zone RZ, and product shelves SH for arranging products are equipped to each store. Each of the zones is assigned in accordance with categories of sales articles (types of products) or the like, for example, such that they are assigned to be a vegetable zone, a confectionery zone, an alcoholic beverage zone, and so on. Each of the zones is an example of a divided region in the area and corresponds to a category or the like of products sold in the store.

The area of the store also includes, for example, a windbreak room section having a cart storage area and an entrance/exit section at the zones Z25 and Z26. In addition, a post-checkout zone may be provided behind the checkout zone RZ. The post-checkout zone is, for example, a place where a cart and a basket having passed through the checkout counter are placed.

The POS system 7 is provided so as to communicate with the server 5 via the network NW. The POS system 7 creates POS data of customer purchase as sales information of the store and accumulates it in a POS database. The store terminal 4 acquires the POS database from the POS system 7 and compares it with the result of executing the customer data creation program by the server 5 (a flow line of each customer). This result is utilized in analyzing behavior of a customer.

Note that the store terminal 4 and the POS system 7 are not essential constituent elements from the point of view of identifying a flow line of an individual customer from a flow line of the radio tag 2.

### (2) Method of Positioning Radio Tag 2

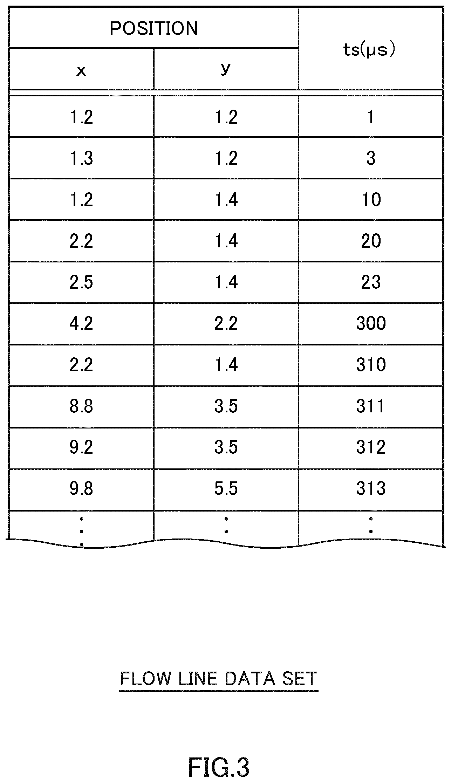

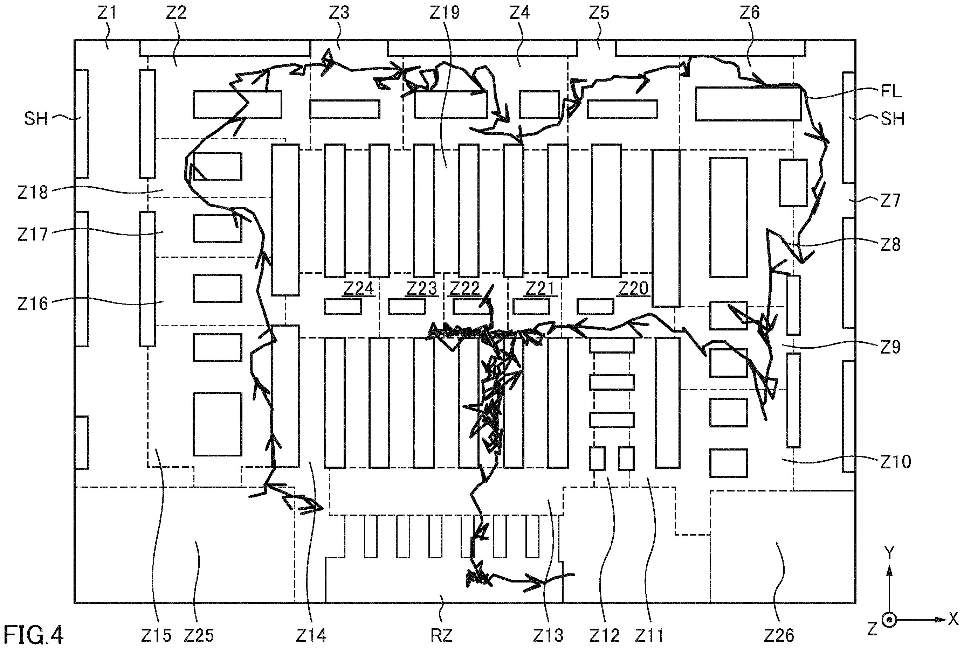

Next, a method of positioning the radio tag 2 will be described with reference to FIGs. 3 and 4.

FIG. 3 shows an example of data components of a flow line data set (also simply called "flow line data" as appropriate). FIG. 4 shows an example of a flow line of one radio tag 2 in the plan view of FIG. 2.

The radio tag 2 is positioned as described above. Specifically, the receiver 3, which is installed on a ceiling of the store, receives a radio wave (beacon signal) that is transmitted from the radio tag 2 attached to a cart being used by a customer. The receiver 3 uses an angle-of-arrival (AOA) method to calculate an incident angle of the received beacon signal. The receiver 3 measures an incident angle (arrival direction) of the beacon signal, which is received from the radio tag 2, and transmits information of the measured incident angle to the server 5. The server 5 estimates the position (XY coordinates) of the radio tag 2 from the position (position in terms of XYZ coordinates) in the store of the source receiver 3 and from the incident angle relative to this position.

The position of the radio tag 2 can be estimated only by one receiver 3 (locator). However, it is preferable to install more receivers 3 in accordance with the degree of a received signal strength indicator (RSSI) of a beacon signal, a store floor area, and a radio wave environment in the store. In one example, the receivers 3 are arranged on a ceiling of the store at equal intervals. The receivers 3 are preferably arranged at shorter intervals particularly at a place that requires high positioning accuracy, such as a place densely having selling sections.

The method of positioning the radio tag 2 is not limited to the AOA method, and another method, such as a time-of-arrival (TOA) method, may be used.

Although being able to be freely set, the positioning interval of the radio tag 2 is set to a time necessary to correctly understand customer behavior (e.g., 100 milliseconds to 2 seconds).

The server 5 calculates the position of the radio tag 2 and records a flow line data set of each radio tag 2.

The flow line data set shown in FIG. 3 contains data (an example of position information) of the position (XY coordinates) of the radio tag 2 at each positioning time (timestamp ts). This flow line data set that is plotted in the plan view of the store in FIG. 2 is illustrated in FIG. 4 as a flow line FL of the radio tag 2. In some cases, due to communication failure between the radio tag 2 and the receiver 3 or sleep operation of the radio tag 2, the receiver 3 may at least temporarily fail to receive a beacon signal (lose a beacon signal) from the radio tag 2.

### (3) Internal Configuration of Purchase Analysis System 1

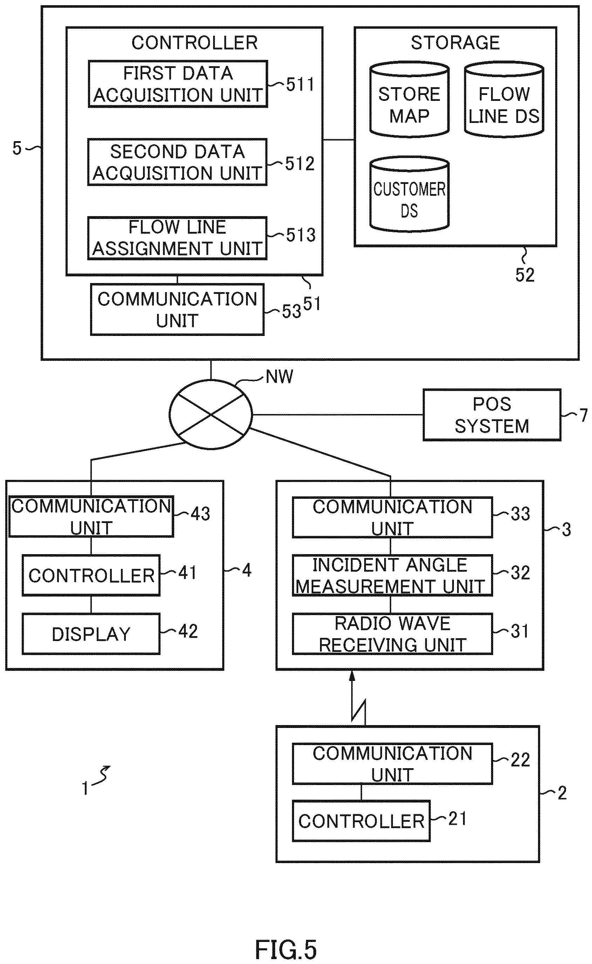

Next, an internal configuration of the purchase analysis system 1 will be described with reference to the block diagram of FIG. 5.

As shown in FIG. 5, the radio tag 2 includes, for example, a controller 21 and a communication unit 22.

The controller 21 is composed mainly of a microcontroller and controls the whole radio tag 2. In one example, the controller 21 processes a reception signal and a transmission signal (processes a baseband signal).

The communication unit 22 is an interface for communicating with the receiver 3. In one example, the communication unit 22 modulates a transmission signal (e.g., a beacon signal) to the receiver 3 and transmits this signal in a broadcast manner in accordance with BLE, for example. The beacon signal contains a tag ID of the radio tag 2.

As shown in FIG. 5, the receiver 3 includes a radio wave receiving unit 31, an incident angle measuring unit 32, and a communication unit 33.

The radio wave receiving unit 31 includes an antenna for receiving a beacon signal (radio wave) that is transmitted from the radio tag 2.

The incident angle measuring unit 32 measures an incident angle of the radio wave that is received from the radio tag 2 by the radio wave receiving unit 31.

The communication unit 33 is an interface for communicating with the radio tag 2 and the server 5. In one example, the communication unit 33 demodulates the reception signal from the radio tag 2. In addition, the communication unit 33 associates the information of the incident angle, which is measured by the incident angle measuring unit 32, with the tag ID contained in the received beacon signal and transmits them to the server 5 via the network NW.

As shown in FIG. 5, the store terminal 4 includes a controller 41, a display 42, and a communication unit 43.

The controller 41 is composed mainly of a microcontroller and controls the whole store terminal 4.

In one example, the controller 41 requests a flow line data set, a customer data set, POS data, etc. to receive these data via the communication unit 43 and to display them.

The display 42 includes a display panel, such as a liquid crystal display (LCD) panel, and a driving circuit for driving the display panel based on display data acquired from the server 5.

In one example, the controller 41 executes a predetermined program to display a flow line of the radio tag 2, a flow line of each customer, POS data, etc., on the display 42, based on a flow line data set per tag ID and a customer data set.

The communication unit 43 functions as a communication interface for communicating with the server 5 via the network NW.

As shown in FIG. 5, the server 5 includes a controller 51, a storage 52, and a communication unit 53.

The controller 51 is composed mainly of a microcontroller and controls the whole server 5. In one example, the microcontroller of the controller 51 executes the customer data creation program, whereby the controller 51 functions as a first data acquisition unit 511, a second data acquisition unit 512, and a flow line assignment unit 513.

The first data acquisition unit 511 (an example of a first acquisition unit) acquires a flow line data set (refer to FIG. 3; an example of flow line information of a communication device) as flow line information of the radio tag 2. The flow line information contains positions and times of the radio tag 2 that is attached to a cart used by a user in the store area. At this time, the first data acquisition unit 511 acquires flow line data per tag ID based on information of an incident angle per tag ID, which is received from the receiver 3.

The second data acquisition unit 512 (an example of a second acquisition unit) refers to the flow line data set, which is acquired by the first data acquisition unit 511, and acquires, based on zone data of each of a plurality of zones that divide the store area, information of zone stay times (an example of stay time information) containing information of a stay time at each zone of the radio tag 2.

The flow line assignment unit 513 assigns at least a piece of the flow line information of the radio tag 2 as flow line information of a customer, based on the information of the zone stay times, which is acquired by the second data acquisition unit 512, and based on time information set per zone. The flow line assignment unit 513 executes a customer creation process and other processes, which will be described later.

The storage 52 is, for example, a mass storage device, such as a hard disk drive (HDD), and it stores a store map, a flow line data set (flow line DS; refer to FIG. 3), and a customer data set (customer DS). Each data in the storage 52 is appropriately updated, added, or deleted upon being accessed by the controller 51.

The store map contains region information (information of XY coordinates) regarding boundaries between the sell zones of the floor of the store. The controller 51 refers to the store map to identify, for example, a sell zone corresponding to the position of the radio tag 2.

Although details are described later, the customer data set is data that is created based on a flow line data set of the radio tag 2 of each tag ID and thus shows a flow line of each customer. The customer data set is created by executing the customer data creation program.

The communication unit 53 functions as a communication interface for communicating with the receiver 3, the store terminal 4, and the POS system 7 via the network NW.

### (4) Customer Data Creation Process Executed By Server 5

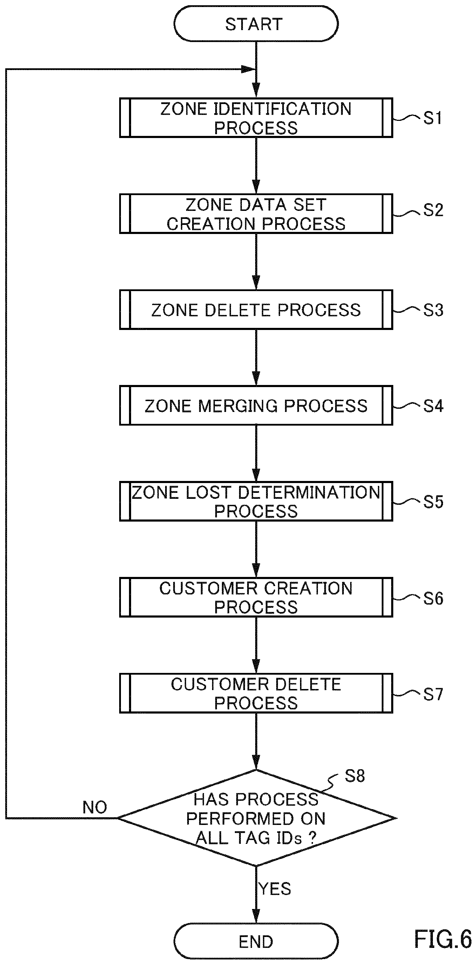

Next, a customer data creation process that is executed by the server 5 will be described with reference to FIGs. 6 to 20.

As described above, the customer data creation process is a process for creating a customer data set showing a flow line of each customer, based on a flow line data set of the radio tag 2 of each tag ID, and it is executed by the controller 51 of the server 5.

### (4-1) Overall Flow

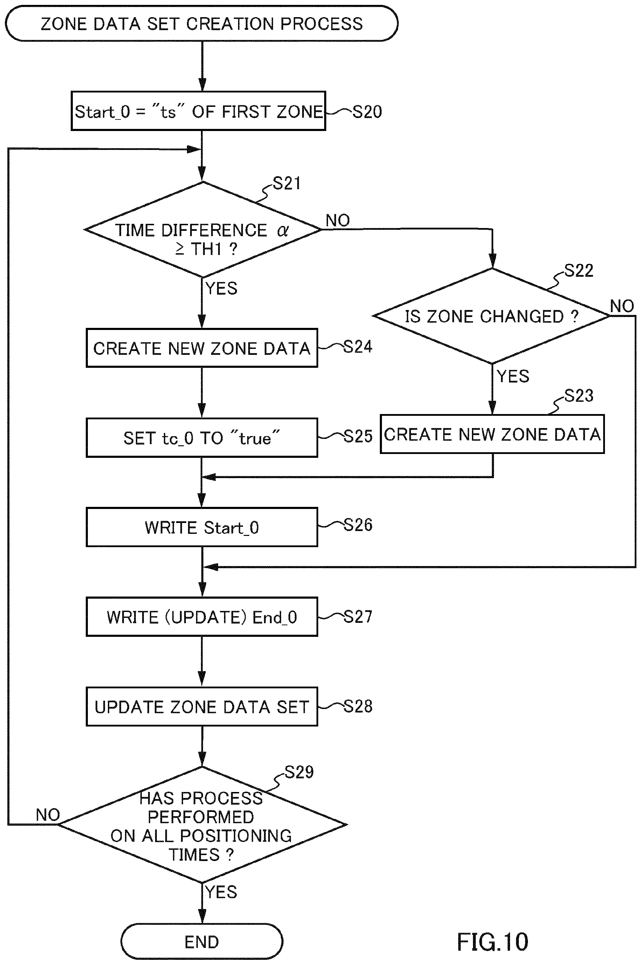

FIG. 6 shows a flowchart of a main routine of the customer data creation process executed by the server 5. Although each process shown in the flowchart in FIG. 10 will be detailed later, the sequence of the following processes is performed on every tag ID (step S8).

### · Zone Identification Process (Step S1)

The zone identification process is a process for creating and updating zone passing data. The zone passing data is created based on a flow line data set corresponding to each tag ID and shows a zone where the radio tag 2 is located, at each positioning time of the radio tag 2. The zone passing data is updated by calculating a time difference between the zones at respective positioning times.

### -Zone Data Set Creation Process (Step S2)

The zone data set creation process is a process for creating a zone data set based on the zone passing data, which is created by the zone identification process. The zone data set is not data of the radio tag 2 per positioning time, but it is data in which data of two or more positioning times of the zone passing data are combined and merged into one data in the case in which the radio tag 2 is continuously located in the same zone. In creating the zone data set, a tag lost cut flag (binary data; described later) is set as necessary. The "tag lost" means a state of the receiver 3 failing to receive a beacon signal of the radio tag 2 due to communication failure between the radio tag 2 and the receiver 3 or sleep operation of the radio tag 2, as described above. The communication failure occurs when the reception strength of the radio wave from the radio tag 2 is low and is not more than a threshold, or the radio wave is not received from the radio tag 2.

### -Zone Delete Process (Step S3)

The zone delete process is a process for deleting data such as of a zone where the stay time of the radio tag 2 is short, and of an invalid zone, based on the zone data set, which is created by the zone data set creation process.

### -Zone Merging Process (Step S4)

The zone merging process is a process for merging two or more identical zones in the zone data set that are, for example, continuously contained.

### -Zone Lost Determination Process (Step S5)

The zone lost determination process is a process for setting a stay time per zone of the radio tag 2, a time difference between two continuous zones, a zone lost cut flag (binary data; described later) based on the time difference, and so on, in the zone data set that has been subjected to the zone delete process and the zone merging process.

### -Customer Creation Process (Step S6)

The customer creation process is a process for creating a customer data set that shows flow line data of each customer, by associating each zone data of the zone data set with a customer based on the tag lost cut flag, the zone lost cut flag, the stay time, the time difference, and so on, which are set by the zone lost determination process.

### -Customer Delete Process (Step S7)

The customer delete process is a process for deleting, for example, customer data that is unlikely to be of an actual flow line of a customer, from the customer data set, which is created by the customer creation process.

### (4-2) Zone Identification Process

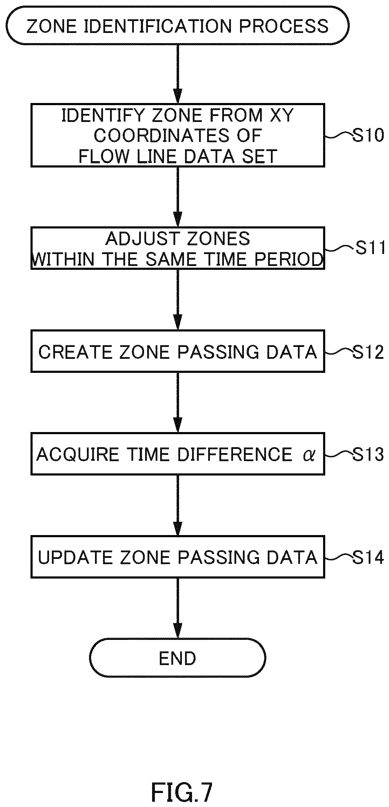

First, the zone identification process will be described with reference to FIGs. 7 to 9.

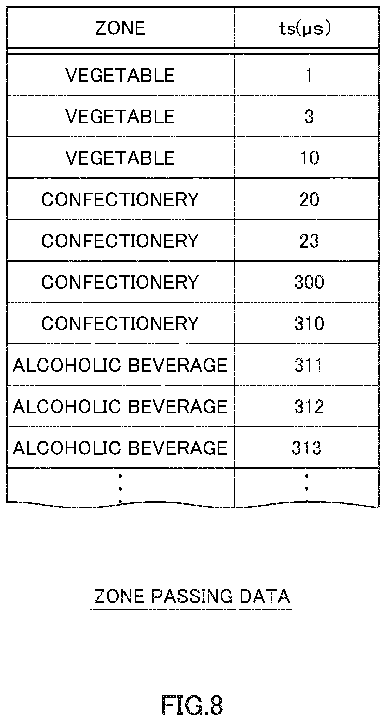

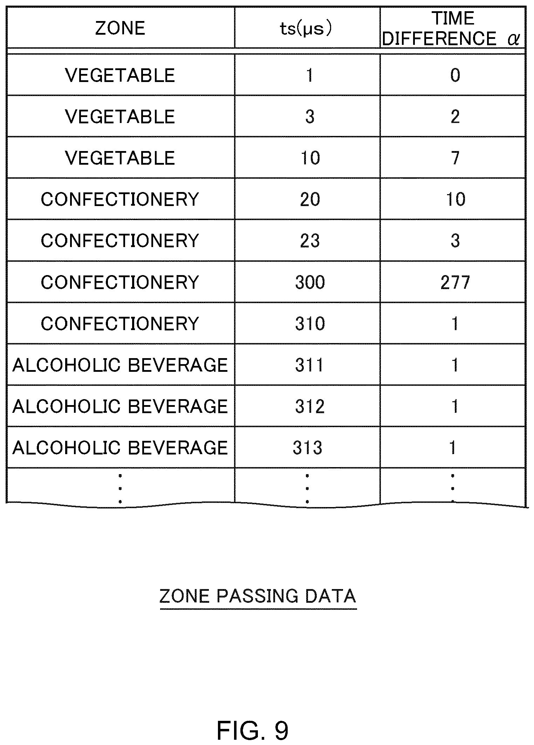

FIG. 7 is a flowchart showing a subroutine of the zone identification process. FIG. 8 shows an example of zone passing data created by the zone identification process. FIG. 9 shows an example of zone passing data updated by the zone identification process.

The zone identification process is a process for identifying a zone where the radio tag 2 is located, at each positioning time, based on a flow line data set that is flow line data of the radio tag 2 per positioning time (an example of flow line information of a communication device).

With reference to the flowchart in FIG. 7, first, the controller 51 refers to the store map to identify a zone corresponding to the position (XY coordinates) of the flow line data set (refer to FIG. 3) (step S10). At this time, the flow line data set may show that, for example, the radio tag 2 exists in two or more zones within a predetermined time, such as at a boundary position of adjacent zones. In this case, zones may be adjusted as follows: the number of times that the radio tag 2 is located in each zone within a predetermined time before and after that time is counted, and a zone with a larger number of the times is identified as a zone where the radio tag 2 is located during the predetermined time (step S11). The controller 51 creates zone passing data, as shown in FIG. 8, based on the processes in steps S10 and S11 (step S12).

Then, the controller 51 acquires a time difference α between positioning times when positioning is continuously performed (step S13), and it writes it to update the zone passing data, as shown in FIG. 9 (step S14).

### (4-3) Zone Data Set Creation Process

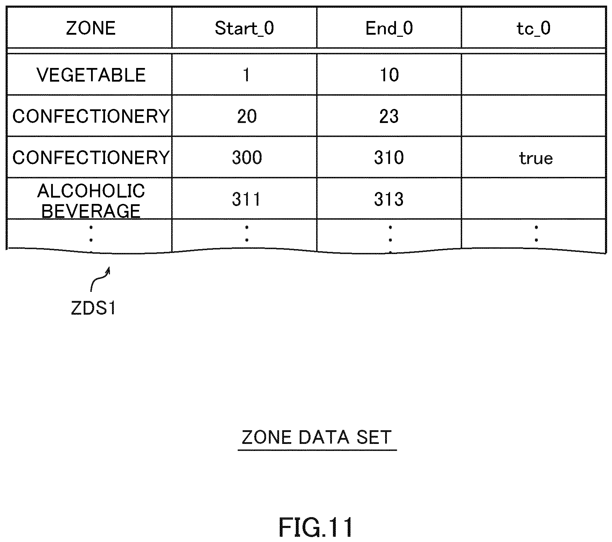

Next, the zone data set creation process will be described with reference to FIGs. 10 and 11.

FIG. 10 is a flowchart showing a subroutine of the zone data set creation process. FIG. 11 shows an example of a zone data set created by the zone data set creation process. The data per row of the zone data set is called "zone data".

The zone data set creation process is a process for creating a zone data set based on the zone passing data, which is created by the zone identification process. The zone data set creation process involves identifying a start time and an end time during a time when the radio tag 2 is continuously located in the identical zones. At this time, in consideration of, for example, a case of failing to receive a beacon signal from the radio tag 2, in the condition that the time difference α, which is obtained by the zone identification process, is not less than a threshold TH1 (e.g., 60 seconds; an example of a second predetermined time), the signal from the radio tag 2 is determined as being lost, and a tag lost cut flag tc_0 is set to "true", for the customer creation process at a later time.

In the process of the flowchart in FIG. 10, first, the timestamp ts of the first zone of the zone passing data in FIG. 9 is set as an initial value of a zone start time Start_0 (step S20). Then, the controller 51 sequentially performs the process of each of steps S21 to S28, for example, on each zone data of the zone data set in FIG. 9 (step S29).

Unless the zone at each positioning time is not changed, and the time difference α between continuous positioning times is not less than the threshold TH1 (step S21: NO, step S22: NO), the timestamp ts of each positioning time is written in the field of a zone end time End_0 (step S27) to update the zone data set (step S28). Thus, a plurality of data of positioning times at identical zones are merged into one zone data. In one example, a plurality of data of vegetable zones in the zone passing data in FIG. 9 are merged into one zone data, as in FIG. 11.

In the case in which, even though the time difference α between the continuous positioning times is less than the threshold TH1 (step S21: NO), a zone at a certain positioning time is changed from a zone at a previous positioning time (step S22: YES), new zone data is created (step S23). In the example of FIG. 9, the vegetable zone is changed to a confectionery zone at the fourth positioning time. Thus, in a zone data set ZDS1 in FIG. 11, zone data of the confectionery zone is created in the second row by changing the row from the first row for the vegetable zone. After creating the new zone data, the controller 51 writes the zone start time Start_0 and the zone end time End_0 and updates the zone data set (steps S26 to S28).

In the case in which the time difference α between continuous positioning times exceeds the threshold TH1, irrespective of change of zones, the controller 51 creates new zone data to make a distinction from a preceding zone (step S24). The controller 51 then sets a tag lost cut flag tc_0, which shows the occurrence of the radio tag 2 losing a signal, to "true" (step S25). After creating the new zone data, the controller 51 writes the zone start time Start_0 and the zone end time End_0 and updates the zone data set (steps S26 to S28).

In the example in FIG. 9, the time difference α at the third positioning time in the confectionery zone exceeds the threshold TH1. Thus, in the zone data set ZDS1 in FIG. 11, zone data of another confectionery zone is created in the third row by changing the row from the confectionery zone in the second row, and the tag lost cut flag tc_0 is set to "true".

The above-described process is applied to the zone of each positioning time of the zone passing data in FIG. 9, whereby the zone data set ZDS1 in FIG. 11 is created.

### (4-4) Zone Delete Process

The zone delete process is a process for deleting data of a zone in which the stay time is short and data of an invalid zone, based on the zone data set, which is created by the zone data set creation process. In the zone delete process, the flow line assignment unit 513 of the controller 51 excludes flow line information of the radio tag 2 from the target to be assigned as flow line information of a customer. This flow line information of the radio tag 2 corresponds to a zone in which the stay time is less than a threshold TH2 (an example of a third predetermined time).

The zone delete process is performed, for example, in order not to consider a case in which a customer returns soon after making a brief stop in a corresponding zone, influence of the radio wave of the radio tag 2, a case in which the position is in an invalid zone, and so on.

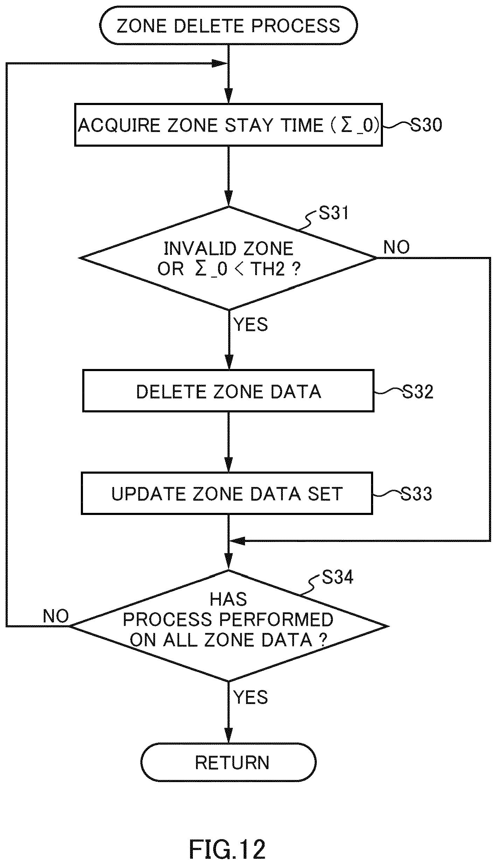

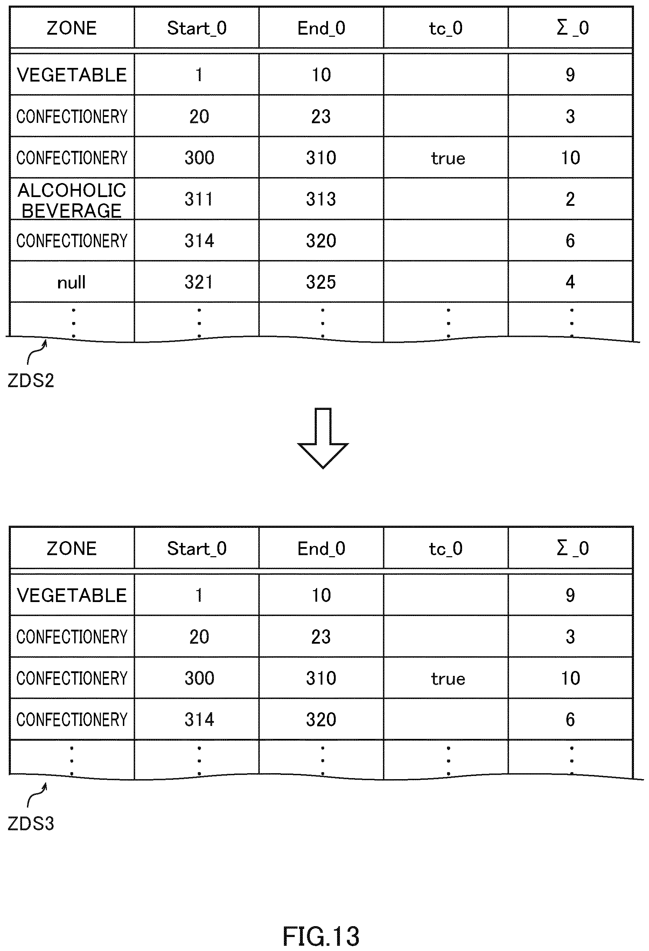

Hereinafter, the zone delete process will be described with reference to FIGs. 12 and 13.

FIG. 12 is a flowchart showing a subroutine of the zone delete process. FIG. 13 shows an example of a zone data set modified by the zone delete process. FIG. 13 shows an example of a zone data set before being modified, at an upper part, and shows an example of the zone data set after being modified, at a lower part.

With reference to FIG. 12, the controller 51 sequentially performs the process of each of steps S30 to S34 on each zone data of the zone data set (step S34).

First, the controller 51 acquires a zone stay time Σ_0 of each zone of the zone data set (refer to FIG. 11), which is created by the zone data set creation process (step S30). The zone stay time Σ_0 is acquired by calculating a difference between the zone start time Start_0 and the zone end time End_0 in each zone data of the zone data set.

Then, in the case in which processing target zone data shows an invalid zone or a zone stay time Σ_0 that is less than the threshold TH2 (e.g., 1 to 2 seconds) (step S31: YES), the controller 51 deletes the processing target zone data from the zone data set and updates the zone data set (steps S32 and S33). The invalid zone includes a zone that cannot be identified by the zone identification process (step S10 in FIG. 7). On the other hand, in the case in which the determination in step S31 results in NO, these processes are not performed.

In the example shown in FIG. 13, the zone stay time Σ_0 (2 seconds) of the zone data corresponding to an alcoholic beverage zone in the fourth row of a zone data set ZDS2 before deletion is less than the threshold TH2, and thus, this zone data is deleted in a zone data set ZDS3. In addition, the zone data corresponding to an invalid zone (null) in the sixth row of the zone data set ZDS2 before deletion is deleted in the zone data set ZDS3.

### (4-5) Zone Merging Process

The zone merging process is a process for merging two or more pieces of continuous zone data of identical zones, for example, in the zone data set ZDS3 shown in FIG. 13, due to the zone delete process.

In one example, it is assumed that a customer stays in a zone "A", a zone "B", and the zone "A", in this order. The zone data corresponding to the zone "B" may be deleted in the zone delete process because of the zone data showing a very short stay time. In this case, the zone data corresponding to the two zones "A" before and after the zone "B" are merged by the zone merging process.

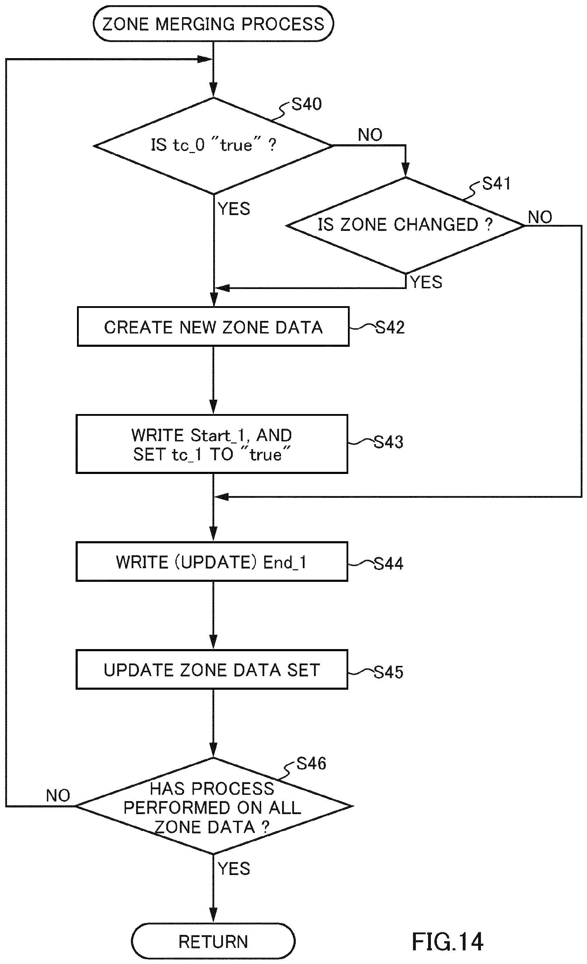

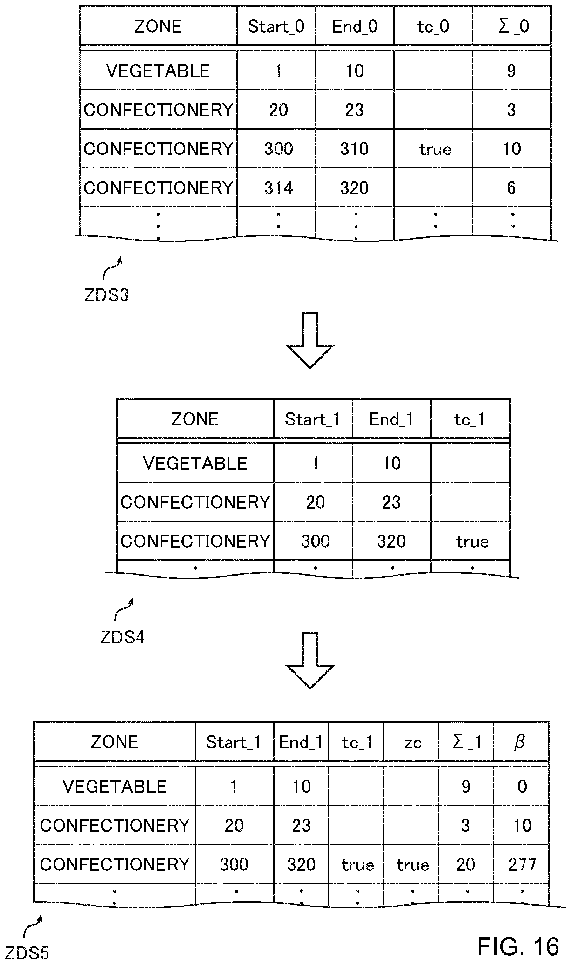

Hereinafter, the zone merging process will be described with reference to FIGs. 14 and 16.

FIG. 14 is a flowchart showing a subroutine of the zone merging process. FIG. 16 shows a change from the zone data set ZDS3 (that is, the zone data set ZDS3 shown in FIG. 13 after the zone delete process is performed) to a zone data set ZDS4, as a modification example of the zone data set due to the zone merging process.

The process of the flowchart in FIG. 14 is performed on, for example, each one row from the top in the zone data set illustrated in the top part in FIG. 16. That is, the controller 51 sequentially performs the process of each of steps S40 to S45, for example, on each zone data of the zone data set in FIG. 16 (step S46).

In one case, with respect to processing target zone data, the tag lost cut flag tc, which shows the occurrence of the signal of the radio tag 2 being lost, is not "true" (step S40: NO), and the zone is not changed compared with the immediately previous zone data (step S41: NO). In this case, the controller 51 writes the value of the zone end time End_0 of the processing target zone data, in the field of a zone end time End_1 (step S54) and updates the zone data set (step S45). Thus, a plurality of zone data corresponding to identical zones satisfying these conditions are merged into one zone data.

In the case in which the tag lost cut flag tc_0 of processing target zone data is "true" (step S40: YES), irrespective of change of zones, the controller 51 creates new zone data to make a distinction from a preceding zone data (step S42). The controller 51 writes the value of the zone start time Start_0 of the processing target zone data, in the field of a zone start time Start_1, and it sets a tag lost cut flag tc_1, which shows the occurrence of the radio tag 2 losing a signal, is set to "true" in the created new zone data (step S43). The controller 51 then writes the value of the zone end time End_0 in the field of the zone end time End_1 (step S44) and updates the zone data set (step S45).

In the example in FIG. 16, the zone data corresponding to the confectionery zone in the third row and the zone data corresponding to the confectionery zone in the fourth row in the zone data set ZDS3 are merged to create zone data (zone start time Start_1 = 300 and zone end time End_1 = 320) corresponding to the confectionery zone in the third row in the zone data set ZDS4 after modification.

### (4-6) Zone Lost Determination Process

The zone lost determination process is a process for acquiring a zone stay time Σ_1 per zone and a time difference β between two continuous zones and setting a zone lost cut flag zc (binary data) based on the time difference β, in the zone data set that has been subjected to the zone delete process and the zone merging process. The zone stay time Σ_1, the time difference β, and the zone lost cut flag zc are parameters to be used in the customer creation process, which will be described later.

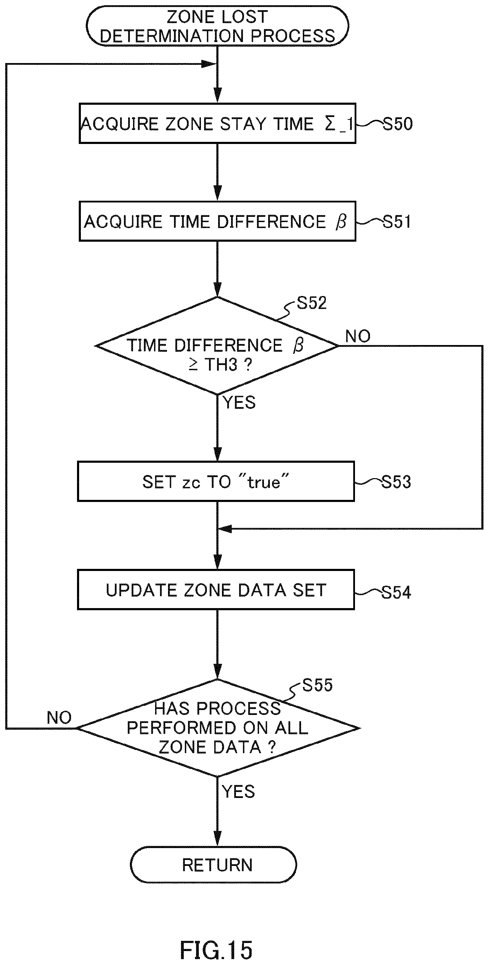

Hereinafter, the zone lost determination process will be described with reference to FIGs. 15 and 16.

FIG. 15 is a flowchart showing a subroutine of the zone lost determination process. FIG. 16 shows a change from the zone data set ZDS4 to a zone data set ZDS5 as a modification example of the zone data set due to the zone lost determination process.

The zone lost cut flag zc is set to "true" in the case in which the time difference β between continuous zone data is determined to be, for example, not less than a threshold TH3 (e.g., 120 seconds; an example of a fourth predetermined time). The "zone lost" means a state of losing a signal of the radio tag 2 between continuous zone data. In one example, fluctuations of radio wave may occur due to communication failure between the radio tag 2 and the receiver 3, or abnormal data (e.g., data generated by a phenomenon in which radio waves are scattered across many zones in a store for a short time) may be generated. In such cases, zone data containing a very short zone stay time is generated. Such zone data is deleted in step S32 (refer to FIG. 12) of the zone delete process, but this results in occurrence of the state of losing a signal of the radio tag 2 between continuous zone data. This state is defined as "zone lost". In view of this, in order to avoid incorrectly determining that a customer stays in the same zone in the zone-lost situation, the zone lost cut flag zc of corresponding zone data is set to "true", for the subsequent customer creation process.

With reference to FIG. 15, the controller 51 sequentially performs the process of each of steps S50 to S54 on each zone data of the zone data set that is updated by the zone merging process (step S55).

First, the controller 51 acquires a zone stay time Σ_1 of each zone of the zone data set (refer to the zone data set ZDS4 in FIG. 16), which is updated by the zone merging process (step S50). The zone stay time Σ_1 is acquired by calculating a difference between the zone start time Start_1 and the zone end time End_1 in each zone data of the zone data set.

In the zone merging process, in the condition that the tag lost cut flag tc_1 is not "true" and the radio tag 2 continuously exists in a plurality of zones of an identical category, a customer is presumed to stay in the same zone, and the plurality of the zones are merged. Thus, in the case in which the radio tag 2 continuously exists in a plurality of zones of an identical category, the second data acquisition unit 512 of the controller 51 acquires the zone stay time Σ_1 based on the assumption that a customer stays in the same zone. The zone stay time Σ_1 is acquired on the assumption that a customer stays in the same zone in the condition that the radio tag 2 continuously exists in a plurality of zones of an identical category. This enables appropriately assigning flow line information of the radio tag 2 as flow line information of a plurality of customers in the subsequent customer creation process.

Then, the controller 51 acquires a time difference β of continuous zone data (step S51). The time difference β is acquired by, for example, calculating a difference between the zone start time Start_1 of processing target zone data and the zone end time End_1 of preceding zone data of the processing target zone data.

In the case in which the time difference β is not less than the threshold TH3 (step S52: YES), the controller 51 sets the zone lost cut flag zc corresponding to the processing target zone data, to "true" (step S53). That is, the controller 51 sets the zone lost cut flag zc to "true" in the case in which the time difference β, which is information of a stay time between a first zone and a second zone, is not less than the threshold TH3. The controller 51 writes the zone lost cut flag zc, the zone stay time Σ_1, and the time difference β in association with the processing target zone data, to update the zone data set (step S54).

In one example, the zone lost determination process is executed on the zone data set ZDS4 in FIG. 16, whereby a zone data set ZDS5 is obtained. In the zone data set ZDS4 in FIG. 16, the time difference β between the "confectionery zone" in the second row and the "confectionery zone" in the third row is 277 (difference between the zone start time Start_1 of the "confectionery zone" in the third row and the zone end time End_1 of the "confectionery zone" in the second row). This time difference β is not less than the threshold TH3 (e.g., 120 seconds), and thus, the zone lost cut flag zc is set to "true".

### (4-7) Customer Creation Process

The customer creation process is a process for creating a customer data set that shows flow line data of each customer, based on the tag lost cut flag tc_1, the zone lost cut flag zc, the zone stay time Σ_1 (an example of stay time information), and so on. In the customer creation process, customer data of an identified customer is created based on each zone data of the zone data set. One or a plurality of pieces of customer data corresponding to the zone data set are called a "customer data set".

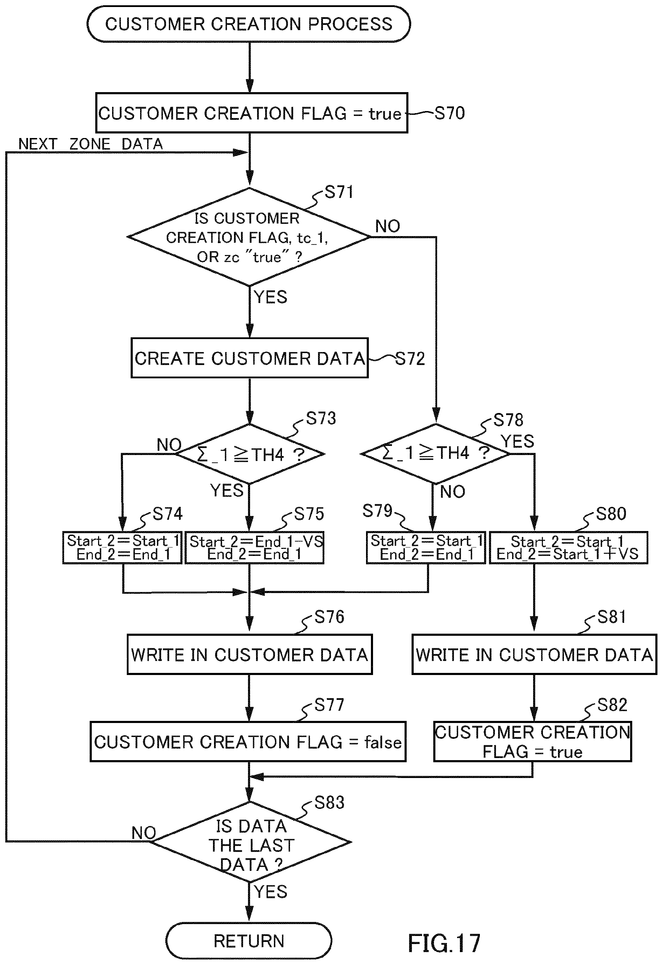

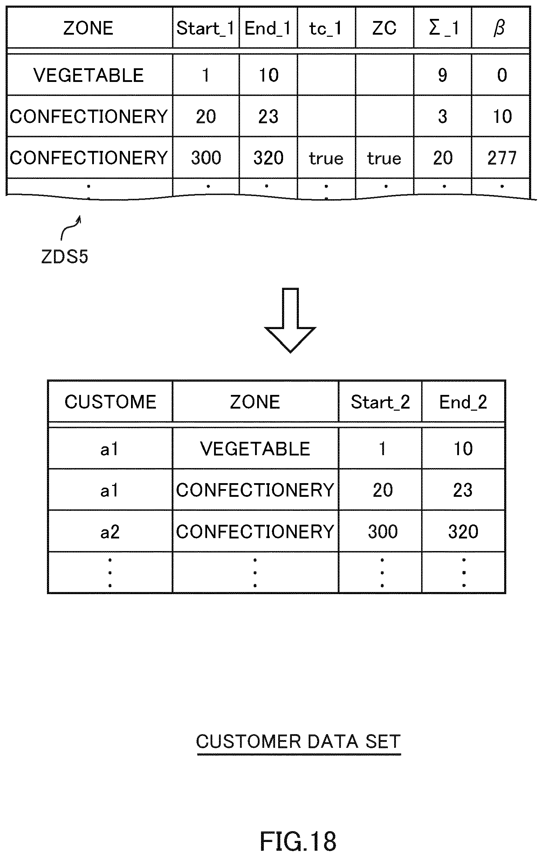

Hereinafter, the customer creation process will be described with reference to FIGs. 17 and 18.

FIG. 17 is a flowchart showing a subroutine of the customer creation process. FIG. 17 schematically shows an example of the customer creation process. A customer data set is created based on information such as the zone data set ZDS5 in FIG. 16 obtained by the above-described process. FIG. 18 shows a more specific example of a customer data set created by the customer creation process.

In one example, in order to appropriately associate each zone data (processing target zone data) in the zone data set ZDS5 shown in FIG. 18 (that is, the zone data set ZDS5 shown in FIG. 16) to one or a plurality of customers, the customer creation process is performed, for example, on the basis of the following (i) to (iii) ideas.
(i) New customer data is created for processing target zone data in which the tag lost cut flag tc_1 or the zone lost cut flag zc is "true". That is, in the case in which the radio tag 2 loses a signal, or for example, the time difference β between continuous zone data is excessively long, new customer data is created in order to make a distinction from a preceding zone data of the processing target zone data. Thus, customer consumption behavior can be analyzed by considering the situation of losing a signal of the radio tag 2 and other situations, whereby analysis accuracy is improved.
(ii) Customer data is not modified (new customer data is not created) on the condition that the zone stay time Σ_1 of each of continuous zone data is less than a threshold TH4 (an example of a first predetermined time). This is because the same customer is presumed to move around between the sell zones in the store, from continuous zone data in which the zone stay times are relatively short.
(iii) New customer data is created on the condition that customer data is already created and the zone stay time Σ_1 of processing target zone data is not less than the threshold TH4. In the case in which customer data is already created and the zone stay time Σ_1 of processing target zone data is not less than the threshold TH4, for example, the customer is presumed to have left the cart as it is. Thus, data for a next customer who uses the same cart is created.

Upon executing the customer creation process, the flow line assignment unit 513 of the controller 51 assigns at least a piece of the flow line information of the radio tag 2 as flow line information of a customer, based on the zone stay time Σ_1 and the time information set per zone (that is, the first predetermined time, the virtual stay time, and so on), in the order from earlier time contained in the flow line information of the radio tag 2. Executing the customer creation process in the order from earlier time contained in the flow line information of the radio tag 2 enables efficiently assigning flow line information of a customer.

Preferably, the virtual stay time is set per zone. The virtual stay time is a part of the zone stay time Σ_1 and is set based on the following assumption: in the case in which the zone stay time Σ_1 of processing target zone data is not less than the threshold TH4, a customer stayed in the corresponding zone. An exact time in which a customer actually stayed, during the zone stay time Σ_1, is not known, but assigning a part of the zone stay time Σ_1 to a customer in accordance with the zone enables reflecting actual conditions of customer behavior in the store. The virtual stay time is an assumed time during which a customer stayed in the zone, and thus, it is set differently depending on the zone. For example, as to a zone being a typical sell zone, a customer is presumed to stay for some length of time, and therefore, a relatively long time is set as the virtual stay time; in contrast, as to a zone being a windbreak room, a customer is unlikely to stay long having a cart in the windbreak room, and therefore, a short time is set as the virtual stay time.

In short, in the case in which the zone stay time Σ_1 of processing target zone data is not less than the threshold TH4, the zone stay time Σ_1 is adjusted by using the virtual stay time set per zone. This is because modifying the zone stay time Σ_1 into a time during which a customer uses a cart or a shopping basket, enables reflecting a certain extent of actual conditions of customer behavior in the store.

Note that setting the virtual stay time is not essential.

With reference to the flowchart in FIG. 17, the controller 51 sets an initial value of a customer creation flag to "true" (step S70). At this time, in the case in which the tag lost cut flag tc_1 or the zone lost cut flag zc of processing target zone data is "true" (step S71: YES), the controller 51 creates new customer data (step S72).

That is, as described above, in the condition that the position of the radio tag 2 is not obtained during the threshold TH1 (an example of the second predetermined time) or longer, the signal of the radio tag 2 is determined as being lost, and the tag lost cut flag tc_0 is set to "true". Then, in the customer creation process, in the condition that the tag lost cut flag tc_1 of processing target zone data is "true", in order to assign flow line information corresponding to zones subsequent to a zone in which the radio tag 2 exists, among the flow line information of the radio tag 2, to flow line information of a new customer, the flow line assignment unit 513 of the controller 51 creates new customer data. This clarifies customer movement before and after the tag-lost situation occurs.

In addition, as described above, in the case in which the time difference β between zone data is not less than the threshold TH3, the zone lost cut flag zc is set to "true". Then, in the customer creation process, on the condition that the zone lost cut flag zc of processing target zone data is "true", in order to assign flow line information corresponding to zones subsequent to a zone in which the radio tag 2 exists, among the flow line information of the radio tag 2, to flow line information of a new customer, the flow line assignment unit 513 of the controller 51 creates new customer data. This clarifies customer movement before and after the zone-lost situation occurs.

Although the tag lost cut flag tc_1 or the zone lost cut flag zc is not "true", the controller 51 creates customer data in the customer data set in an initial stage of the process, because the customer creation flag is set to "true" in step S70.

The controller 51 does not modify a zone start time Start_2 and a zone end time End_2 of the customer data in the case in which the zone stay time Σ_1 of processing target zone data is less than the threshold TH4 (step S73: NO). That is, the zone start time Start_2 of the customer data uses the zone start time Start_1 of the processing target zone data as it is, whereas the zone end time End_2 of the customer data uses the zone end time End_1 as it is (step S74). This data corresponds to, for example, the time when a new customer starts moving with a cart.

The controller 51 adjusts the zone start time Start_2 of the customer data by using the virtual stay time VS in the case in which the zone stay time Σ_1 of processing target zone data is not less than the threshold TH4 (step S73: YES). Specifically, the zone start time Start_2 of the customer data is calculated by subtracting the virtual stay time VS from the zone end time End_1 of the processing target zone data, whereas the zone end time End_2 of the customer data uses the zone end time End_1 of the processing target zone data as it is (step S75). For example, this applies to a case in which a new customer starts using a cart that is left as it is, and the zone start time Start_2 of the customer data is adjusted to a time when the customer is presumed to start using the cart, in consideration of the virtual stay time VS based on the zone end time End_1 of the processing target zone data.

After determining the zone start time Start_2 and the zone end time End_2 of the customer data in step S74 or S75, the controller 51 writes them in the customer data (step S76) and sets the customer creation flag to "false" (step S77).

On the other hand, in the case in which the customer creation flag is not "true", and the tag lost cut flag tc_1 or the zone lost cut flag zc is not "true" (step S71: NO), that is, in the case in which the customer data is already created, the zone stay time Σ_1 of processing target zone data may be less than the threshold TH4. Under these conditions (step S78: NO), the controller 51 uses the zone start time Start_1 of the processing target zone data for the zone start time Start_2 of the customer data as it is, and also uses the zone end time End_1 of the zone processing target zone data for the zone end time End_2 of the customer data as it is (step S79). For example, this applies to a case in which the customer data is already created and the corresponding customer continues using the cart.

The controller 51 adjusts the zone end time End_2 of the customer data by using the virtual stay time VS in the case in which the zone stay time Σ_1 of processing target zone data is not less than the threshold TH4 (step S78: YES). Simultaneously, the zone start time Start_2 of the customer data uses the zone start time Start_1 of the processing target zone data as it is, whereas the zone end time End_2 of the customer data is calculated by adding the virtual stay time VS to the zone start time Start_1 of the processing target zone data (step S80). For example, this applies to a case in which a cart is left as it is for a long time after being used by a customer. In such a case, the zone end time End_2 of the customer data is adjusted to a time when the customer is presumed to finish using the cart, in consideration of the virtual stay time VS based on the zone start time Start_1 of the processing target zone data.

After determining the zone start time Start_2 and the zone end time End_2 of the customer data, the controller 51 writes them in the customer data (step S81) and sets the customer creation flag to "true" (step S82). The controller 51 advances to the process in step S71 in the case in which the processing target zone data is not the last zone data (step S83: NO) or finishes the process in the case in which the processing target zone data is the last zone data (step S83: YES).

As described above, in the case in which at least a piece of the flow line information of the radio tag 2 is already assigned as flow line information of a customer, and the zone stay time Σ_1 of processing target zone data is not less than the threshold TH4 (an example of the first predetermined time), the flow line assignment unit 513 of the controller 51 assigns flow line information of zone data subsequent to the processing target zone data, as flow line information of a customer different from the customer to which the flow line information is already assigned. Dividing the flow line information of the radio tag 2 based on the zone stay time Σ_1 enables accurately assigning flow line information of each customer.

The flow line assignment unit 513 of the controller 51 sets the virtual stay time VS during which a customer stays, with respect to each zone. On the basis of this virtual stay time VS, the flow line assignment unit 513 of the controller 51 adjusts the zone start time or the zone end time of the customer data, in the case in which the zone stay time Σ_1 is not less than the threshold TH4 (an example of the first predetermined time) that is set per zone. Thus, as described above, it is possible to reflect a certain extent of actual conditions of customer behavior in the store.

FIG. 18 shows an example of a customer data set that is obtained by executing the customer creation process based on the zone data set (zone data set ZDS5 in FIG. 16), which is created by the zone lost determination process. Each customer data of the customer data set shows information of the zone start time Start_2 and the zone end time End_2, which are determined in step S74, S75, S79, or S80 in the customer creation process in FIG. 17. The flow line data of individual customers (e.g., a customer a1 and a customer a2) are determined by referring to the flow line data set (refer to FIG. 3) of the radio tag 2.

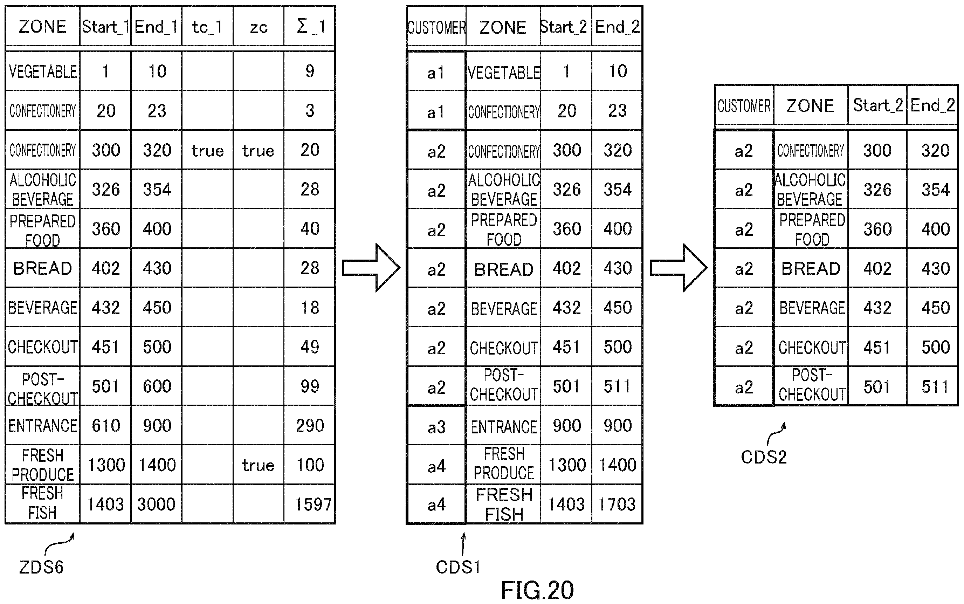

FIG. 20 shows an example of a customer data set CDS1 that is created by the customer creation process shown in FIG. 17, from a zone data set ZDS6 that is created by the zone lost determination process shown in FIG. 16.

Herein, the customer creation process shown in FIG. 17 will be described by using the zone data set ZDS6 in FIG. 20. First, the controller 51 sets the initial value of the customer creation flag to "true" (step S70). Due to the customer creation flag being "true" (step S71), the controller 51 creates customer data "customer a1" in the customer data set CDS1 in FIG. 20 (step S72). The controller 51 then determines whether the zone stay time Σ_1 ("9 seconds" in the zone data set ZDS6 in FIG. 20) of the processing target "vegetable zone data" is not less than the threshold TH4 (e.g., 300 seconds for a typical sell zone) (step S73).

Upon determining the zone stay time Σ_1 of the processing target "vegetable zone data" to be less than the threshold TH4 (step S73: NO), the controller 51 uses the values of Start_1 and End_1 of the "vegetable zone data" shown in the zone data set ZDS6 in FIG. 20, for the zone start time Start_2 and the zone end time End_2 of the "vegetable zone data" of the customer data "customer a1", as they are (step S74). The controller 51 writes these values in the field of the "vegetable zone data" of the customer data "customer a1" in the customer data set CDS1 ("1" for the zone start time Start_2 and "10" for the zone end time End_2) (step S76). Then, the controller 51 sets the customer creation flag to "false" (step S77) and returns to the process in S71 because the data is not the last zone data (step S83: NO).

With respect to the next processing target "confectionery zone data" in the zone data set ZDS6 in FIG. 20, the controller 51 determines that each of the customer creation flag, the tag lost cut flag tc_1, and the zone lost cut flag zc is not "true" (step S71: NO) and that the zone stay time Σ_1 of the processing target "confectionery zone data" is less than the threshold TH4 (step S78: NO). Then, the controller 51 uses the values of Start_1 and End_1 of the "confectionery zone data" shown in the zone data set ZDS6 in FIG. 20, for the zone start time Start_2 and the zone end time End_2 of the "confectionery zone data" of the customer data "customer a1", as they are (step S79). The controller 51 writes these values in the field of the "confectionery zone data" of the customer data "customer a1" in the customer data set CDS1 (step S76). Then, the controller 51 sets the customer creation flag to "false" (step S77) and returns to the process in S71 because the data is not the last zone data (step S83: NO).

Thereafter, since the next processing target "confectionery zone data" in the zone data set ZDS6 shown in FIG. 20 shows the tag lost cut flag tc_1 and the zone lost cut flag zc being "true" (step S71: YES), the controller 51 creates customer data "customer a2" in the customer data set CDS1 in FIG. 20 (step S72). Upon determining the zone stay time Σ_1 of the processing target "confectionery zone data" to be less than the threshold TH4 (step S73: NO), the controller 51 uses the values of Start_1 and End_1 of the "confectionery zone data" shown in the zone data set ZDS6 in FIG. 20, for the zone start time Start_2 and the zone end time End_2 of the "confectionery zone data" of the customer data "customer a2", as they are (step S74). The controller 51 writes these values in the field of the "confectionery zone data" of the customer data "customer a2" in the customer data set CDS1 (step S76).

The subsequent processing target zone data ("alcoholic beverage", "prepared food", "bread", "beverage", and "checkout") in the zone data set ZDS6 in FIG. 20 are subjected to the processes in steps S71, S78, S79, and S76 in FIG. 17, and the values of Start_1 and End_1 of the corresponding zone data shown in the zone data set ZDS6 are written in the fields of the zone start time Start_2 and the zone end time End_2 of the customer data "customer a2" in the customer data set CDS1 as they are.

Furthermore, the next processing target "post-checkout zone data" in the zone data set ZDS6 in FIG. 20 is subjected to the processes in steps S71 and S78, and the controller 51 determines the zone stay time Σ_1 of the "post-checkout zone data" to be not less than the threshold TH4 (e.g., a threshold of 5 seconds set for the "post-checkout zone") (step S78: YES). Then, the controller 51 uses the value of Start_1 of the "post-checkout zone data" shown in the zone data set ZDS6, for the zone start time Start_2 of the "post-checkout zone data" of the customer data "customer a2", as it is.

Meanwhile, the controller 51 adjusts the zone end time End_2 of the "post-checkout zone data" of the customer data "customer a2" by using the virtual stay time VS (e.g., a virtual stay time of 10 seconds for the "post-checkout zone"), based on the zone start time Start_1 of the "post-checkout zone data" shown in the zone data set ZDS6 (step S80). The controller 51 then writes the resultant value in the field of the "post-checkout zone" of the customer data "customer a2" shown in the customer data set CDS1 (that is, the zone end time End_2 is adjusted to "511") (step S81). In addition, the customer creation flag is set to "true" (step S82).

Next, since the next processing target "entrance zone data" in the zone data set ZDS6 shows a customer creation flag being "true" (step S71), the controller 51 creates customer data "customer a3" in the customer data set CDS1 (step S72). The zone stay time Σ_1 ("290 seconds" shown in the zone data set ZDS6) of the processing target "entrance zone data" is not less than the threshold TH4 (e.g., a threshold of 5 seconds set for the "entrance zone") (step S73: YES). Thus, the controller 51 adjusts the zone start time Start_2 of the "entrance zone data" of the customer data "customer a3" by using the virtual stay time VS (e.g., a virtual stay time of 0 seconds for the "entrance zone"), based on the zone end time End_1 of the "entrance zone data" in the zone data set ZDS6.

Meanwhile, the controller 51 uses the value of the zone end time End_1 shown in the zone data set ZDS6, for the zone end time End_2 of the "entrance zone data" of the customer data "customer a3", as it is (step S75). The controller 51 then writes these values in the field of the "entrance zone data" of the customer data "customer a3" in the customer data set CDS1 (that is, the zone start time Start_2 is adjusted to "900") (step S76).

The next processing target "fresh produce zone data" in the zone data set ZDS6 shows the zone lost cut flag zc being "true" (step S71: YES), and thus, the controller 51 creates customer data "customer a4" in the customer data set CDS1 (step S72). In response to the zone stay time Σ_1 of the processing target "fresh produce zone data" not exceeding the threshold T4 (step S73: NO), the controller 51 performs the process in step S74 and writes the values of Start_1 and End_1 of the "fresh produce zone data" shown in the zone data set ZDS6, in the fields of the zone start time Start_2 and the zone end time End_2 of the "fresh produce zone data" of the customer data "customer a4" in the customer data set CDS1, as they are (step S76).

As to the next processing target "fresh fish zone data" in the zone data set ZDS6, the controller 51 performs the processes in steps S71, S78, and S80 and uses the value of the zone start time Start_1 shown in the zone data set ZDS6, for the zone start time Start_2 of the "fresh fish zone data" of the customer data "customer a4", as it is. Meanwhile, the controller 51 adjusts the zone end time End_2 of the "fresh fish zone data" of the customer data "customer a4" by using the virtual stay time VS (e.g., a virtual stay time of 300 seconds for a typical "sell zone"), based on the zone start time Start_1 of the processing target "fresh fish zone data" (step S80). The controller 51 then writes the resultant value in the field of the "customer a4" in the customer data set CDS1 (that is, the zone end time End_2 is adjusted to "1703") (step S81). Thereafter, the controller 51 finishes the process after performing the processes in steps S82 and S83.

The data per customer of the customer data set corresponds to flow line information of a user, which is assigned as a piece of the flow line information of the radio tag 2.

As described above, the customer creation process is executed to create a customer data set in which each zone data contained in the zone data set is assigned to customer data per customer. For example, the customer data set is created based on whether the zone stay time of the processing target zone data exceeds the threshold TH4 and on other factors. Thus, suitably setting the threshold TH4 and other values per zone enables appropriately determining, for example, changing timing of a user (customer) who uses a cart in a store.

Under these conditions, in the case of the zone stay time of the processing target zone data exceeding the threshold TH4, the customer data is adjusted, for example, to a virtual stay time that is shorter than the zone stay time. This provides consumer behavior data that fits to actual conditions of a customer in a store.

The values of the threshold TH4 and the virtual stay time VS may be set differently depending on the zone corresponding to the processing target zone data, such as the category and the type of business of the store, the area of a zone that is allocated per type of products, or the customer tendency.

In particular, the threshold TH4 to be used as a reference for dividing the zone data set of the radio tag 2 into pieces of customer data can be set as follows. For example, a customer is expected to stand still in the same position due to behavior such as looking at a product and lining up at a checkout, in a sell zone and a checkout zone, and therefore, the threshold TH4 is preferably set to time information, for example, 1200 seconds. In contrast, the threshold TH4 is preferably set to time information, for example, 5 seconds, for places where a customer usually does not stop, such as a windbreak room and an entrance/exit. The threshold TH4 should be set to a relatively short time also in a post-checkout zone, because a customer usually behaves in such a manner as to immediately leave a cart as it is.

The setting of the threshold TH4 differs depending on the type of business of the store. For example, in a store such as an apparel store, a customer is expected to stand still at a certain place for the purpose of picking up a product and trying it on in front of a mirror or for another purpose. In the case of a store such a bookstore, a customer is normally considered to stand still in the same place for the purpose of reading while standing, such as in a magazine corner or for another purpose. In view of this, the threshold TH4 in this zone should be set longer than that for another zone.

As to the virtual stay time VS that is a time for adjusting the zone stay time Σ_1 that exceeds the threshold TH4, it can be set to, for example, a value that differs per zone in accordance with the threshold TH4. In one example in which the threshold TH4 is 1200 seconds for a sell zone and a checkout zone, the virtual stay time VS is set to 300 seconds. On the other hand, the threshold TH4 may be set to 5 seconds for a windbreak room and an entrance/exit, where a customer is unlikely to stand still for a long time, and the virtual stay time VS may be set to 0 seconds. The virtual stay time VS can be empirically set per zone, based on possible customer behavior.

### (4-8) Customer Delete Process

The customer delete process is a process for deleting customer data that is unlikely to be of an actual flow line of a customer, from the customer data set, which is created by the customer creation process.

The customer data that is unlikely to be of an actual flow line of a customer is flow line data, for example, in the case in which a worker moves a cart that is left in the store or the like to a cart storage area. Specifically, the flow line assignment unit 513 of the controller 51 deletes the flow line information assigned to the customer in the case in which the number of zones where the customer stayed is less than a threshold TH5 (an example of a predetermined number) in the flow line information assigned to a customer.

That is, in the case in which the number of zones through which a customer moves around in a store (unique zone-movement number) is less than the threshold TH5, for example, the corresponding data is presumed to be not customer data and is deleted from the customer data set. The unique zone-movement number is a unique number of zones through which a customer moves and is set per store. In one example, the movement number for movement from a confectionery zone to an alcoholic beverage zone can be counted as "2".

For example, a path along which a worker or another person moves a cart to a cart storage area in a windbreak room differs depending on the store floor area, the store layout, and division of zones (dimensions of each zone), and thus, the threshold TH5 is preferably set to an optimal value per store.

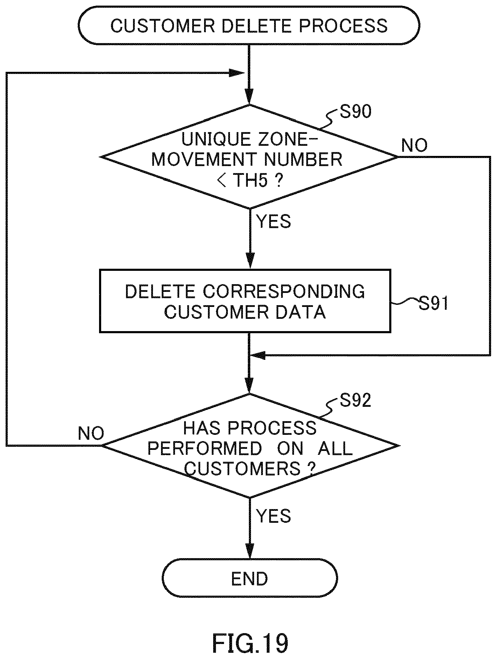

Hereinafter, the customer delete process will be described with reference to FIGs. 19 and 20. FIG. 19 is a flowchart showing a subroutine of the customer delete process. FIG. 20 shows an example of the customer creation process and the customer delete process.

With reference to FIG. 19, the controller 51 determines whether the unique zone-movement number is less than the threshold TH5, with respect to each customer data of the customer data set, which is created by the customer creation process (step S90). Upon determining that the unique zone-movement number is less than the threshold TH5 (step S90: YES), the controller 51 deletes the corresponding customer data (step S90). The threshold TH5 is set to a unique movement number "7", for example. On the other hand, upon determining that the unique movement number is not less than the threshold TH5 (step S90: NO), the controller 51 determines whether every customer data of the customer data set is processed (step S92). The controller 51 returns to the process in step S90 upon determining that not every customer data has been processed (step S92: NO), and it finishes the process upon determining that every customer data has been processed (step S92: YES).

In the example shown FIG. 20, the unique zone-movement numbers of the "customer a1", the "customer a3", and the "customer a4" in the customer data set CDS1 are less than the threshold TH5, and thus, the customer data corresponding to the "customer a1", the "customer a3", and the "customer a4" are deleted. The threshold TH5 can be appropriately determined in accordance with the category and the type of business of the store, the store floor area, and the number of divided zones in the floor of the store.

### (5) Application Examples

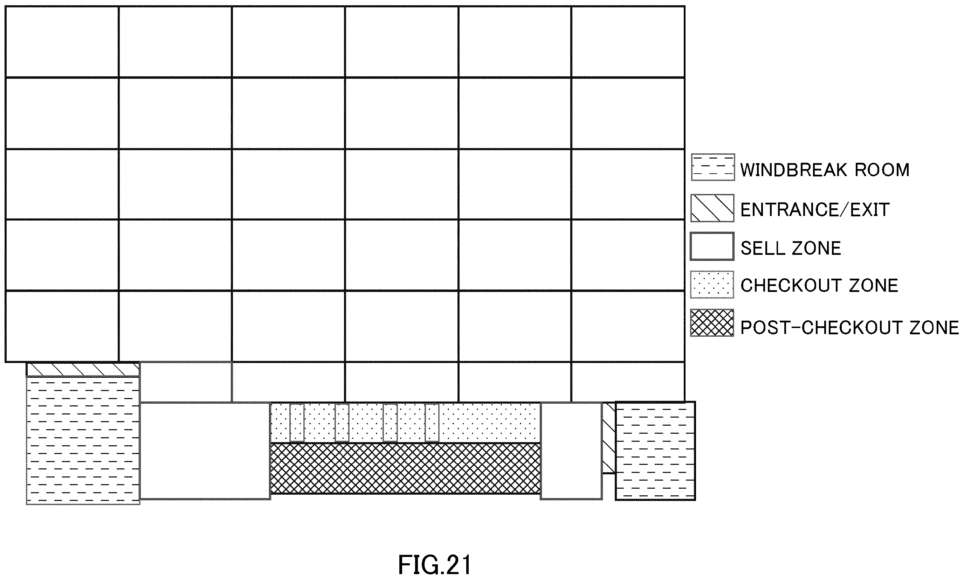

Next, specific application examples of the customer data creation process based on flow lines of a radio tag 2 will be described with reference to FIGs. 21 to 26.

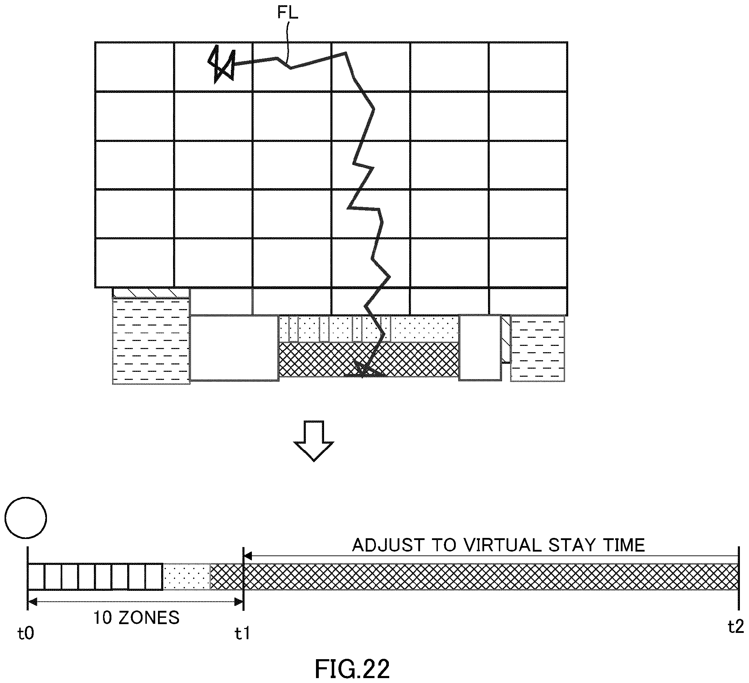

FIG. 21 is a plan view of an exemplary store used as the base of flow line examples of a radio tag 2 shown in FIGs. 22 to 26. For the store illustrated in FIG. 21, examples of the threshold TH4 and the virtual stay time VS are set as follows.
- Windbreak room···Threshold TH4 = 5 seconds, Virtual stay time VS = 0 seconds
- Entrance/Exit···Threshold TH4 = 5 seconds, Virtual stay time VS = 0 seconds
- Sell zone···Threshold TH4 = 1200 seconds, Virtual stay time VS = 300 seconds
- Checkout zone···Threshold TH4 = 1200 seconds, Virtual stay time VS = 300 seconds
- Post-checkout zone···Threshold TH4 = 5 seconds, Virtual stay time VS = 10 seconds

Each of FIGs. 22 to 26 shows an example of a flow line of a radio tag and an example of correspondence with a customer. Each of FIGs. 22 to 26 shows a flow line example of a radio tag on an upper side and also shows zones in a virtually laterally arranged manner on a lower side. The zones are where the radio tag 2 included in the flow line example on the upper side stays. Note that the stay time of a zone and the length in the lateral direction may not necessarily correspond to each other.

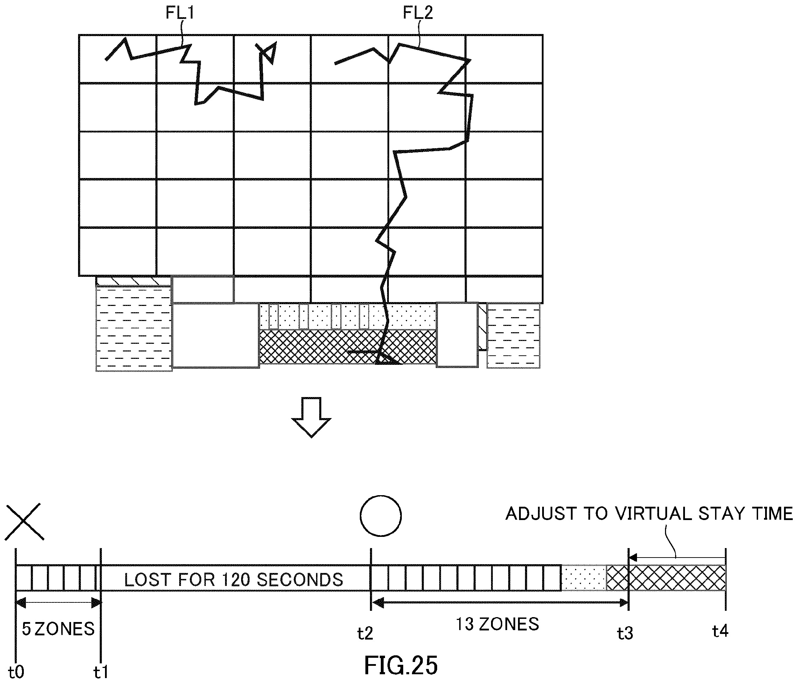

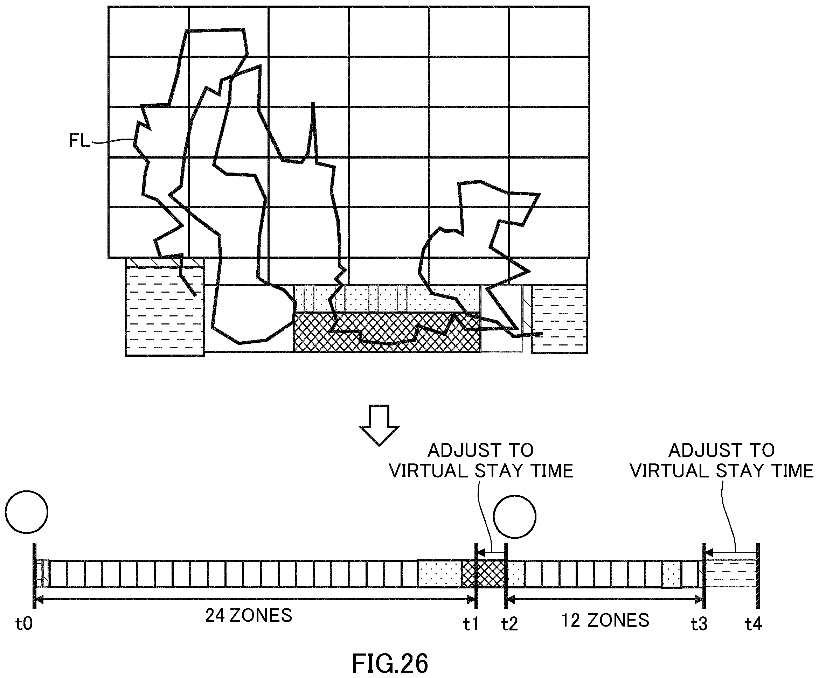

In each of FIGs. 22 to 26, the time t0 shows a start time of the flow line of the radio tag 2. The time t2 in FIGs. 22 to 24 shows an end time of the flow line of the radio tag 2. The time t4 in FIGs. 25 and 26 shows an end time of the flow line of the radio tag 2. The time between the start time and the end time of the flow line of the radio tag 2 shows a time before or after it is adjusted by using the virtual stay time.

In each of FIGs. 22 to 26, the "O" mark shows a start time of customer data that is determined as being valid, whereas the "x" mark shows a start time of customer data that is determined as being invalid.

### (5-1) Application Example 1 (FIG. 22)

As shown in FIG. 22, the flow line FL of the radio tag 2 in the application example 1 assumes that a customer starts using a cart placed in the sell zone at the time t0, and the customer then passes through the checkout zone to pay therein and leaves the cart in the post-checkout zone until time t2.

In one example, the stay time in the post-checkout zone of the flow line FL is not less than the threshold TH4 (e.g., a threshold of 5 seconds set for the "post-checkout zone") in the process in step S78 of the customer creation process shown in FIG. 17. Thus, the zone end time t2 of the post-checkout zone is adjusted by using the virtual stay time VS (e.g., a virtual stay time of 10 seconds for the "post-checkout zone") in the process in step S80. That is, as to the flow line FL in FIG. 22, the zone end time t2 (End_1 shown in FIG. 17) of the post-checkout zone is adjusted to a zone end time t1 (start time of the post-checkout zone + virtual stay time of 10 seconds) (End_2 shown in FIG. 17).

The customer data (flow line data from the time t0 to the time t1) that is created in this example shows movement passing through unique zones more than the threshold TH5 in the process in step S90 shown in FIG. 19 (the unique zone-movement number from the sell zone to the post-checkout zone is "10"). As a result, this data is not deleted in the customer delete process and is determined as being valid customer data.

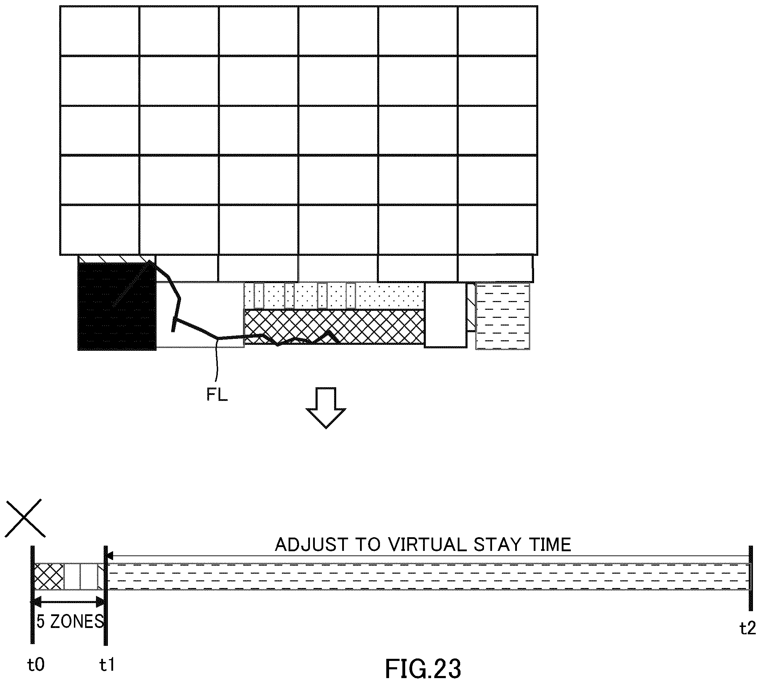

### (5-2) Application Example 2 (FIG. 23)

As shown in FIG. 23, the flow line FL of the radio tag 2 in the application example 2 assumes that a cart placed in the post-checkout zone starts to be moved at the time t0, from the sell zone to the windbreak room via the entrance/exit. For example, this can occur when a worker moves the cart to the windbreak room for the purpose of tidying up.

In one example, the stay time in the windbreak room zone of the flow line FL is not less than the threshold TH4 (e.g., a threshold of 5 seconds for the "windbreak room zone") in the customer creation process in FIG. 17. Thus, the zone end time t2 of the windbreak room zone is adjusted by using the virtual stay time VS (e.g., a virtual stay time of 0 seconds for the "windbreak room zone") in the process in step S80. That is, as to the flow line FL in FIG. 23, the zone end time t2 (End_1 shown in FIG. 17) of the windbreak room zone is adjusted to a zone end time t1 (start time of the windbreak room zone + virtual stay time of 0 seconds) (End_2 shown in FIG. 17). The customer data (flow line data from the time t0 to the time t1) that is created in this example shows movement passing through unique zones less than the threshold TH5 in the customer delete process in FIG. 19 (the unique zone-movement number from the post-checkout zone to the windbreak room zone is "5"). As a result, this data is deleted in the customer delete process and is determined as being invalid customer data.

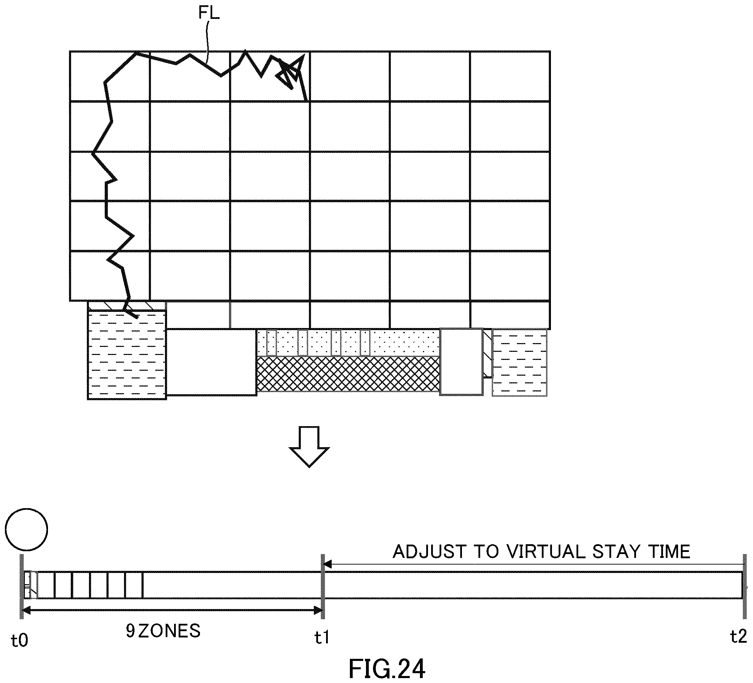

### (5-3) Application Example 3 (FIG. 24)

As shown in FIG. 24, the flow line FL of the radio tag 2 in the application example 3 assumes that a customer starts using a cart placed in the windbreak room, at the time t0, and the customer then leaves the cart in the sell zone.

In one example, the stay time in the sell zone of the flow line FL is not less than the threshold TH4 (e.g., a threshold of 1200 seconds for the "sell zone") in the customer creation process in FIG. 17. Thus, the zone end time t2 of the sell zone is adjusted by using the virtual stay time VS (e.g., a virtual stay time of 300 seconds for the "sell zone") in the process in step S80. That is, as to the flow line FL in FIG. 22, the zone end time t2 (End_1 shown in FIG. 17) of the sell zone is adjusted to a zone end time t1 (start time of the sell zone where the customer stays first + virtual stay time of 300 seconds) (End_2 shown in FIG. 17). The customer data (flow line data from the time t0 to the time t1) that is created in this example shows movement passing through unique zones more than the threshold TH5 in the customer delete process in FIG. 19 (the unique zone-movement number from the windbreak room zone to the last sell zone is "9"). As a result, this data is not deleted in the customer delete process and is determined as being valid customer data.

### (5-4) Application Example 4 (FIG. 25)

The application example 4 shown in FIG. 25 assumes a situation in which a signal of the radio tag 2 is interrupted, or another situation. That is, the flow line of the radio tag 2 shown in FIG. 25 includes a flow line FL1 before the signal of the radio tag 2 is lost and a flow line FL2 after the signal of the radio tag 2 is able to be received. In this situation, the zone lost cut flag zc_1 is set to "true" due to the time difference β between the sell zones during which the signal of the radio tag 2 is lost, whereby the flow line FL2 after time t2 is assigned as new customer data.

First, first customer data corresponding to the flow line FL1 is created in the customer creation process in FIG. 17. Then, since processing target zone data corresponding to the flow line FL2 contains the zone lost cut flag zc_1 being "true" (step S71: YES), second customer data is created for the flow line FL2 (step S72). The zone stay time of the post-checkout zone of the second customer data is not less than the threshold TH4 in the process in step S78 in FIG. 17. Thus, in the same manner as in the application example 1 in FIG. 22, the zone end time t4 of the post-checkout zone is adjusted to zone end time t3 (start time of the post-checkout zone + virtual stay time of 10 seconds) in the process in step S80.

The first customer data (from the time t0 to the time t1 before the signal of the radio tag 2 is lost), which is created in this example, has a unique zone-movement number less than the threshold TH5 in the customer delete process in FIG. 19, and it is thereby determined as being invalid customer data. On the other hand, the second customer data (flow line data from time t2 to time t3) has a unique zone-movement number greater than the threshold TH5 in the customer delete process in FIG. 19, and it is thereby determined as being valid customer data.

### (5-5) Application Example 5 (FIG. 26)

As shown in FIG. 26, the flow line FL of the radio tag 2 of the application example 5 assumes the following situation. A first customer starts using a cart in the windbreak room for shopping at the time t0 and leaves the cart in the post-checkout zone after payment, and the next customer starts shopping using this cart and leaves the cart in the windbreak room after payment.

First, first customer data is created with respect to the flow line FL in the customer creation process in FIG. 17. The stay time of the post-checkout zone is not less than the threshold TH4 in the process in step S78 in FIG. 17. Thus, in the same manner as in the application example 1 in FIG. 22, the zone end time t2 of the post-checkout zone is adjusted to a zone end time t1 (start time of the post-checkout zone + virtual stay time of 10 seconds) in the process in step S80.

Next, the customer creation flag is set to "true" in the process in step S82, and second customer data is created with respect to the subsequent flow line FL (step S72 in FIG. 17). The stay time of the windbreak room zone of the flow line FL is not less than the threshold TH4 in the process in step S78 in FIG. 17. Thus, in the same manner as in the application example in FIG. 23, the zone end time t4 is adjusted to a zone end time t3 (start time of the windbreak room zone + virtual stay time of 0 seconds) in the process in step S80.

The first customer data (flow line data from the time t0 to the time t1) and the second customer data (flow line data from the time t2 to the time t3) that are created in this example show movement through unique zones in a number greater than the threshold TH5 in the customer delete process in FIG. 19, and they are thereby determined as being valid customer data, respectively.

As described above, in the purchase analysis system 1 of this embodiment, the server 5 executes the customer data creation process, whereby flow line data of the radio tag 2 attached to a cart, a shopping basket, or the like, corresponds to flow line data of one or a plurality of customers.

Although an embodiment of the information processor, the information processing method, and the program is described above, the present invention should not be limited to the foregoing embodiment. In addition, the embodiment described above can be variously modified and altered within the scope not departing from the gist of the present invention.

In one example, although the store terminal 4 and the server 5 exchange data with each other via the network NW in the above-described embodiment, the method of exchanging data is not limited thereto. Data can be exchanged between the store terminal 4 and the server 5 by a storage medium, such as a universal serial bus (USB) memory, a secure digital (SD) memory card, an HDD, or a solid state drive (SSD). The same applies to data exchange between the POS system 7 and the server 5.

## Claims

1. An information processor comprising:
a first acquisition unit configured to acquire flow line information containing positions and times of a communication device that is attached to a product carrying tool used in an area by a user;
a second acquisition unit configured to acquire, based on the flow line information of the communication device acquired by the first acquisition unit, stay time information of each of a plurality of divided regions that divide the area; and
a flow line assignment unit configured to assign at least a piece of the flow line information of the communication device as flow line information of the user, based on the stay time information acquired by the second acquisition unit and based on time information set to each of the plurality of divided regions.

2. The information processor according to claim 1, wherein the flow line assignment unit is configured to assign at least a piece of the flow line information of the communication device as the flow line information of the user, based on the stay time information and the time information set to each of the plurality of divided regions, in time order in the flow line information of the communication device.

3. The information processor according to claim 1 or 2, wherein, in a case in which at least a piece of the flow line information of the communication device has already been assigned as the flow line information of the user, and the stay time information of the divided region acquired by the second acquisition unit is not less than a first predetermined time, the flow line assignment unit is configured to assign flow line information that corresponds to divided regions subsequent to the divided region, as line information of a user different from the user.

4. The information processor according to claim 1 or 2, wherein, in a case in which the position of the communication device is not obtained by the first acquisition unit during a second predetermined time or longer, the flow line assignment unit is configured to assign flow line information corresponding to divided regions subsequent to a divided region where the communication device exists, among the flow line information of the communication device, to flow line information of a new user.

5. The information processor according to any one of claims 1 to 4, wherein the flow line assignment unit is configured to exclude flow line information corresponding to a divided region in which a stay time contained in the stay time information is less than a third predetermined time, from a target to be assigned as the flow line information of the user.

6. The information processor according to claim 4,
wherein each of the plurality of divided regions corresponds to a category of sales products, and
wherein, in a case in which the position of the communication device is acquired by the first acquisition unit, within a time less than a second predetermined time, and the communication device continuously stays in divided regions of the same category, the second acquisition unit, assuming the divided regions as a single divided region, is configured to acquire stay time information of this divided region.

7. The information processor according to any one of claims 1 to 6,
wherein the plurality of divided regions includes a first divided region and a second divided region different from the first divided region, and
wherein, in a case in which stay time information between the first divided region and the second divided region is not less than a fourth predetermined time, the flow line assignment unit is configured to assign flow line information corresponding to the second divided region and subsequent divided regions, to flow line information of a new user.

8. The information processor according to claim 2, wherein the flow line assignment unit is configured to set a virtual stay time during which the user stays, with respect to each of the plurality of divided regions, and
wherein, in a case in which the stay time information acquired by the second acquisition unit is not less than the first predetermined time set with respect to each divided region, the flow line assignment unit is configured to adjust this stay time information based on the virtual stay time.

9. The information processor according to any one of claims 1 to 8, wherein, in a case in which the number of divided regions where the user has stayed is less than a predetermined number in the flow line information assigned to the user, the flow line assignment unit is configured to delete the flow line information that has been assigned to the user.

10. An information processing method comprising:
acquiring flow line information containing positions and times of a communication device that is attached to a product carrying tool used in an area by a user;
acquiring, based on the acquired flow line information of the communication device, stay time information of each of a plurality of divided regions that divide the area; and
assigning at least a piece of the flow line information of the communication device as flow line information of the user, based on the acquired stay time information and time information set to each of the plurality of divided regions.

11. A program configured to make a computer execute a predetermined method, the method comprising:
acquiring flow line information containing positions and times of a communication device that is attached to a product carrying tool used in an area by a user;
acquiring, based on the acquired flow line information of the communication device, stay time information of each of a plurality of divided regions that divide the area; and
assigning at least a piece of the flow line information of the communication device as flow line information of the user, based on the acquired stay time information and time information set to each of the plurality of divided regions.

12. A computer-readable recording medium recording a program, the program configured to make a computer execute a predetermined method,
the method comprising:
acquiring flow line information containing positions and times of a communication device that is attached to a product carrying tool used in an area by a user;
acquiring, based on the acquired flow line information of the communication device, stay time information of each of a plurality of divided regions that divide the area; and
assigning at least a piece of the flow line information of the communication device as flow line information of the user, based on the acquired stay time information and time information set to each of the plurality of divided regions.
